# EUROPEAN PATENT APPLICATION

(11) **EP 4 293 777 A1**
(43) Date of publication of application: **20.12.2023**
(21) Application number: 22930129.6
(22) Date of filing: 01.04.2022
(51) Int. Cl.: H01M 10/0525, H01M 4/58, H01M 10/0567

(54) **SECONDARY BATTERY, BATTERY MODULE, BATTERY PACK, AND ELECTRIC DEVICE**

(71) Applicant: Contemporary Amperex Technology Co., Ltd., Ningde, Fujian (CN)
(72) Inventor: ZHANG, Limei, Ningde Fujian 352100 (CN); CHEN, Peipei, Ningde Fujian 352100 (CN); PENG, Chang, Ningde Fujian 352100 (CN); LIU, Jiao, Ningde Fujian 352100 (CN)
(74) Representative: Gong, Jinping
(86) International application number: PCT/CN2022/084859
(87) International publication number: WO 2023/184496

(57) **Abstract**

A secondary battery, a battery module, a battery pack, and an electric device. The secondary battery includes a cathode piece and a non-aqueous electrolyte, in which, the cathode piece includes a cathode active material, and the cathode active material has a chemical formula represented by LiₐAₓMn_{1-y}B_{y}P_{1-z}C_{z}O₄₋ₙDₙ; the non-aqueous electrolyte includes a first lithium salt and a first additive, optionally, the first lithium salt is one or more selected from the group consisting of LiN(CₘF₂ₘ₊₁SO₂)(CₙF₂ₙ₊₁SO₂) and Li(FSO₂)₂N, m and n represent positive integers; the first additive includes one or more of a compound represented by Formula 1. Using the cathode active material and/or a combination of the cathode active material and the non-aqueous electrolyte improves the rate performance, cycle performance, and high temperature stability of the lithium manganese phosphate secondary battery.

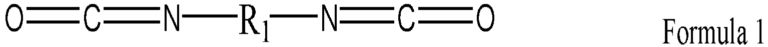

## Description

### TECHNICAL FIELD

The present application relates to the technical field of lithium batteries, and more particularly to a secondary battery, a battery module, a battery pack, and an electric device.

### BACKGROUND

In recent years, as the application range of lithium-ion batteries has become more and more extensive, lithium-ion batteries have been widely used in energy storage power systems such as hydropower, thermal power, wind power, and solar power stations, as well as power tools, electric bicycles, electric motorcycles, electric vehicles, military equipment, aerospace, and other fields. Due to the great development of lithium-ion batteries, higher requirements have been exerted on energy density, cycle performance and safety performance.

Compared with other cathode active materials, lithium manganese phosphate cathode active materials have higher safety and cycle life, but is disadvantageous in its poor rate performance, which is usually solved by means of coating or doping. However, it is still desired to further improve the rate performance, cycle performance, and high temperature stability of lithium manganese phosphate cathode active materials.

### SUMMARY

The present application is made in view of the above problems, and it is an objective of the present application to provide a secondary battery, a battery module, a battery pack, and an electric device to solve the problem of poor rate performance and cycle performance of the lithium manganese phosphate secondary battery.

In order to achieve the above objective, a first aspect of the present application provides a secondary battery, including a cathode piece and a non-aqueous electrolyte. The cathode piece includes a cathode active material, and the cathode active material has a chemical formula represented by LiₐAₓMn_{1-y}B_{y}P_{1-z}C_{z}O₄₋ₙDₙ, in which, A includes one or more elements selected from the group consisting of Zn, Al, Na, K, Mg, Nb, Mo, and W; B includes one or more elements selected from the group consisting of Ti, V, Zr, Fe, Ni, Mg, Co, Ga, Sn, Sb, Nb, and Ge; C includes one or more elements selected from the group consisting of B (boron), S, Si, and N; D includes one or more elements selected from the group consisting of S, F, Cl, and Br; a is selected from a range of 0.9 to 1. 1; x is selected from a range of 0.001 to 0.1; y is selected from a range of 0.001 to 0.5; z is selected from a range of 0.001 to 0.1; n is selected from a range of 0.001 to 0.1, and the cathode active material is electrically neutral;

the non-aqueous electrolyte comprises a first lithium salt and a first additive; optionally, the first lithium salt comprises one or more selected from the group consisting of LiN(CₘF₂ₘ₊₁SO₂)(CₙF₂ₙ₊₁SO₂) and Li(FSO₂)₂N, in which, m and n represent positive integers; and

the first additive comprises one or more of a compound represented by Formula 1, 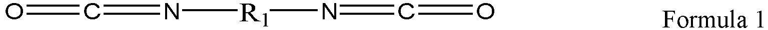
in which, Ri represents any one of a C₂-C₁₀ alkylene, a C₂-C₁₀ heteroalkylene, a C₆-C₁₈ arylene, a C₂-C₁₈ heteroarylene, a C₃-C₁₈ alicyclylene, a C₃-C₁₈ heteroalicyclylene, which are substituted by one or more Rₐ or are unsubstituted; and
Rₐ comprises one or more selected from a halogen atom, -CN, -NCO, -OH, -COOH, -SOOH, a -COOR_{b}, a C₂-C₁₀ alkyl, a C₂-C₁₀ alkenyl, a C₂-C₁₀ alkynyl, a C₂-C₁₀ oxaalkyl, and R_{b} is any one selected from C₁-C₁₀ alkyls.

Unless otherwise stated, in the above chemical formula, when A is two or more elements, the limitation on the numerical range of x is not only a limitation on a stoichiometric number of each element as A, but also a limitation on a sum of stoichiometric numbers of all elements as A. For example, when A is two or more elements A1, A2...An, the stoichiometric numbers x1, x2...xn of A1, A2...An each need to fall within the numerical range defined by the application for x, and the sum of x1, x2... xn also needs to fall within this value range. Similarly, for the case where B, C, and D are two or more elements, the limitation of the numerical range of the stoichiometric number of B, C, and D in the present application also has the above meaning.

The cathode active material of the present application is obtained by element doping in the compound LiMnPO₄, in which, A, B, C, and D represent elements doped at the Li site, the Mn site, the P site, and O site of the compound LiMnPO₄, respectively. Without wishing to be bound by theory, it is believed that the performance improvement of lithium manganese phosphate is related to reducing the lattice change rate of lithium manganese phosphate and reducing surface activity during lithium deintercalation. Reducing the lattice change rate can reduce the lattice constant difference between the two phases at the grain boundary, reduce the interfacial stress, and enhance the Li⁺ transport capacity at the interface, thereby improving the rate performance of the cathode active material. However, high surface activity can easily lead to serious interface side reactions, and aggravate gas production, electrolyte consumption, and interface damage, thereby affecting battery cycle performance. In the present application, the lattice change rate is reduced by Li-site and Mn-site doping. Mn-site doping can also effectively reduce surface activity, thereby inhibiting the dissolution of manganese ions and the interface side reaction between the cathode active material and the electrolyte. P-site doping makes the change rate of the Mn-O bond length faster, lowers the small polaron migration barrier of the material, and thus being beneficial to the electronic conductivity. O-site doping has good effect on reducing the side reactions at the interface. The doping of P site and O site also affects the dissolution of manganese ions and kinetic performance of antisite defects. Therefore, doping reduces the concentration of antisite defects in the material, improves the kinetic performance and gram capacity of the material, and can also change the morphology of the particles, thereby increasing the compaction density. The applicant unexpectedly found that by doping the Li site, Mn site, P site, and O site of the compound LiMnPO₄ with a specific element at a specific amount of the application at the same time, a significantly improved rate performance can be obtained, while significantly reducing dissolution of Mn and Mn-site doping elements results in significantly improved cycle performance and/or high-temperature stability, and the gram capacity and compacted density of the material can also be improved.

In addition, the non-aqueous electrolyte includes the first lithium salt as the main lithium salt, due to its excellent thermal stability and hydrolysis resistance, the first lithium salt can effectively reduce the acidity of the electrolyte, reduce the dissolution of manganese ions, and improve high-temperature cycle, and storage performance. The isocyanate-based compound represented by Formula 1 is introduced into the electrolyte, and can react with trace water in the battery to form -NHCOOH, prevent trace water from interacting with non-aqueous electrolyte to produce HF, further reduce the acidity of the electrolyte and reduce the dissolution of manganese ions, thereby improving high-temperature cycle and storage performance. Moreover, the isocyanate-based compound represented by Formula 1 can also form a uniform SEI film on the anode, reduce the reduction of dissolved Mn at the anode, and further improve the high-temperature cycle and storage performance.

In some embodiments, R₁ represents any one of a C₂-C₁₀ alkylene, a C₂-C₁₀ oxaalkylene, a C₂-C₁₀ azaalkylene, phenylene, naphthylene, anthrylene, cyclobutylene, cyclopentylene, cyclohexylene, biphenylene, methylenediphenylene, which are substituted by one or more Rₐ or are unsubstituted; optionally, the Ri represents any one of a C₂-C₆ alkylene, phenylene, naphthylene, anthracene, cyclobutylene, cyclopentylene, cyclohexylene, biphenylene, and methylenediphenylene, which are substituted by one or more Rₐ or are unsubstituted; and/or, the Rₐ comprises one or more selected from a halogen atom, -CN, and a C₂-C₃ alkyl; and/or, a number of the Rₐ in the compound represented by Formula 1 is 0, 1, 2, 3, or 4.

Optionally, the first additive includes one or more of the following compounds:

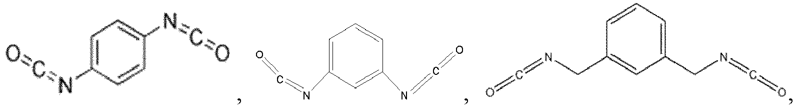

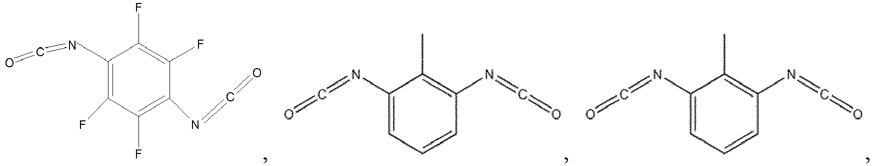

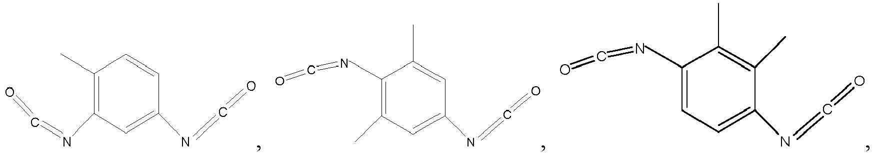

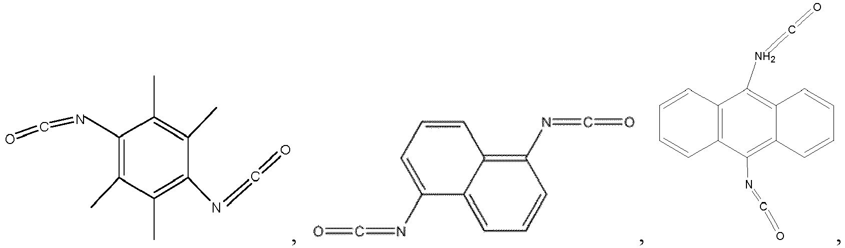

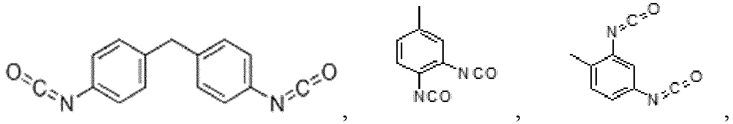

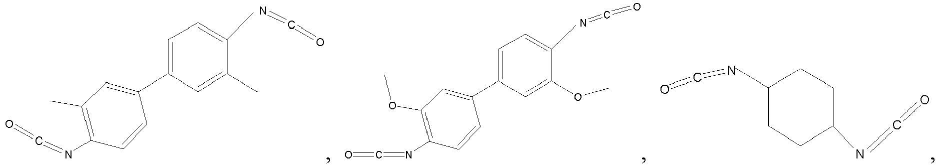

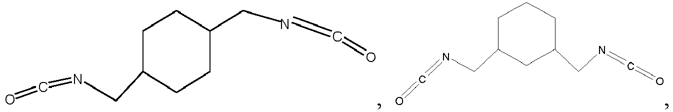

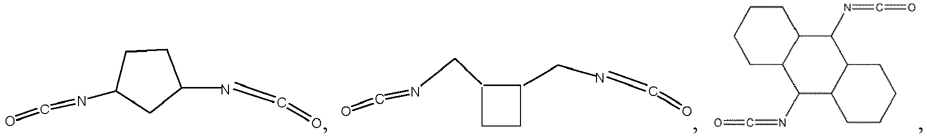

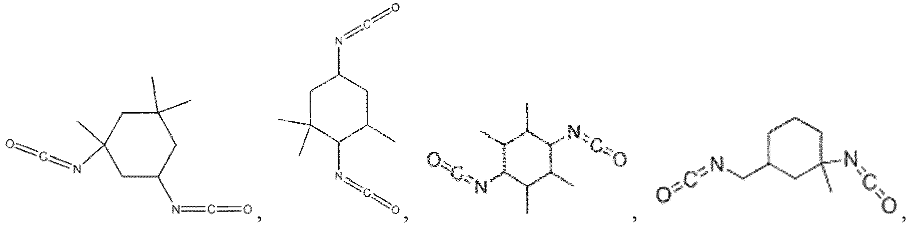

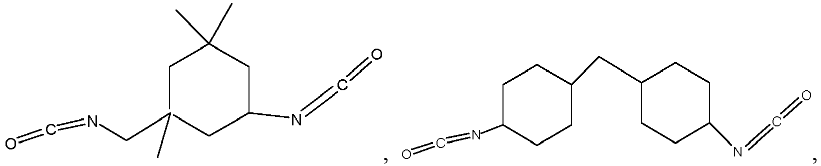

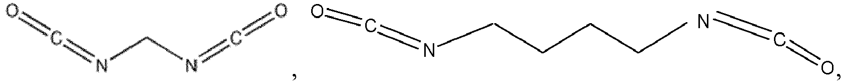

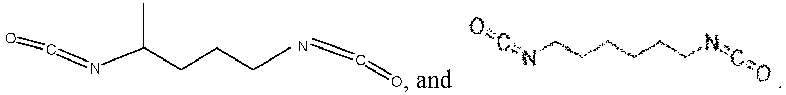

The LiN(CₘF₂ₘ₊₁SO₂)(CₙF₂ₙ₊₁SO₂) in the first lithium salt may be selected from any corresponding specific substance in the existing technology, and in some embodiments, m and n each independently represent 1, 2, or 3, so as to provide more excellent thermal stability.

In some embodiments of the present application, when the first lithium salt is any one selected from LiN(CF₃SO₂)₂ and Li(FSO₂)₂N, the first additive is any one selected from the following compounds:

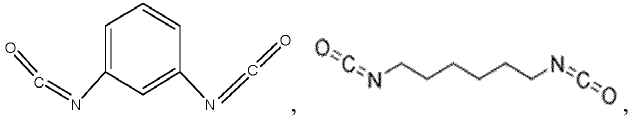

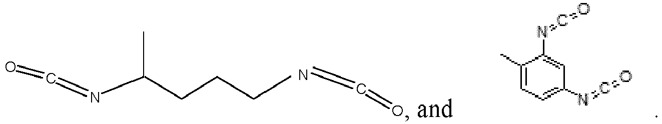

In this way, the advantages of the first lithium salt and the first additive are fully utilized and the acidity of the electrolyte and the dissolution of manganese ions are significantly reduced, and the high-temperature cycle and storage performance of the lithium-ion battery are significantly improved.

In some embodiments, based on a total weight of the non-aqueous electrolyte, a content of the first lithium salt is W1 wt. %, W1 is between 0.1 and 48 (such as 0.1, 0.5, 1, 2, 3, 4, 5, 7, 10, 12, 14, 15, 16, 18, 20, 22, 25, 28, 30, 40, 45, or 48), optionally between 5 and 20, such that the problem of aluminum foil corrosion caused by the first lithium salt at high operating voltage is alleviated.

In some embodiments, a content of the first additive is W2 wt. %, W2 is between 0.01 and 20 (such as 0.01, 0.05, 0.1, 0.2, 0.3, 0.4, 0.5, 1, 2, 3, 4, 5, 8, 10, 12, 15, 18 or 20), optionally between 0.1 and 10 or between 0.3 and 5, when a weight ratio of the first additive in the electrolyte is within the above range, not only is the acidity of the electrolyte lowered and the manganese ion dissolution reduced, but also the deterioration of the impedance of the anode is avoided, thereby improving the high-temperature cycle and storage performance of the lithium-ion battery, while not affecting the capacity and rate performance of the lithium-ion battery.

In some embodiments, the W2/W1 is defined as M, and M is between 0.001 and 3 (such as 0.001, 0.002, 0.005, 0.007, 0.1, 0.2, 0.3, 0.4, 0.5, 1, 2 or 3), optionally between 0.005 and 0.5. When W2/W1 is within the above range, the first lithium salt and the first additives can play a better synergistic effect to ensure that the acidity of the system is low, the dissolution of manganese ions is reduced, and the high-temperature cycle and storage performance of lithium ions are excellent.

On the basis of controlling the content of the first lithium salt, in some embodiments, the lithium salt in the non-aqueous electrolyte can be supplemented by adding a second lithium salt, that is, the non-aqueous electrolyte further includes a second lithium salt, and the second lithium salt includes one or more selected from lithium difluorophosphate, lithium difluorodioxalate phosphate, lithium difluorooxalate borate, lithium bisoxalate borate, LiPF₆, and LiBF₄. The second lithium salt is added to the non-aqueous electrolyte as a lithium salt-type additive, which will be preferentially decomposed on a surface of an aluminum foil, and the insoluble precipitate formed by the combination of a decomposition product and the aluminum ion adheres to the surface of the aluminum foil, thereby forming a passivation film, which prevents the direct contact between the aluminum foil and the electrolyte, protects the aluminum foil, and in turn cooperates with the first lithium salt to improve high-temperature cycle and storage performance.

In some embodiments, based on the total weight of the non-aqueous electrolyte, a content of the second lithium salt is W3 wt. %, and W3 is between 0.01 and 20 (such as 0.01, 0.02, 0.05, 0.08, 0.1, 0.2, 0.3, 0.5, 0.8, 1, 2, 3, 4, 5, 6, 7, 8, 9, 10, 15, and 20), optionally between 0.1 and 10 or between 0.3 and 5. When a weight ratio of the second lithium salt in the electrolyte is within the above range, not only is the corrosion of the aluminum foil inhibited, but also the high-temperature cycle and storage performance of the lithium-ion battery are improved, while not deteriorating the capacity and rate performance of the lithium-ion battery.

In some embodiments, (W2+W3)/W1 is defined as N, and N is between 0.01 and 5 (such as 0.01, 0.02, 0.05, 0.08, 0.1, 0.5, 0.8, 1.0, 2, 3, 4 or 5), optionally between 0.02 and 1. When W2/W1 and (W2+W3)/W1 are within the above ranges, the three can play a better synergistic effect, ensuring that the acidity of the system is low, the dissolution of manganese ions is reduced, and the high-temperature cycle and storage performance of lithium ions are excellent; in addition, the corrosion of aluminum foil is effectively inhibited, the high-temperature cycle and storage performance of lithium-ion batteries are improved, while not deteriorating the capacity and rate performance of the lithium-ion battery.

In some embodiments, the non-aqueous electrolyte further includes a second additive, and the second additive includes one or more selected from the group consisting of a cyclic carbonate compound containing an unsaturated bond, a halogen-substituted saturated cyclic carbonate compound, a sulfate compound, a sulfite compound, a sultone compound, a disulfonic acid compound, a nitrile compound, an aromatic compound, a phosphazene compound, a cyclic anhydride compound, a phosphorous acid ester compound, a phosphate ester compound, a borate ester compound. Those skilled in the art can select the corresponding second additive from the above substances according to actual needs, and the amount of the second additive in the non-aqueous electrolyte can also refer to the existing technology, which will not be repeated in the present application.

In some embodiments, the non-aqueous electrolyte further includes an organic solvent. The type of the organic solvent is not particularly limited and can be selected according to actual needs. Specifically, the organic solvent includes one or more of a cyclic carbonate compound, a chain carbonate compound, and a carboxylate compound. Operationally, the organic solvent includes one or more of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl formate, methyl acetate, ethyl acetate, propyl acetate, methyl propionate, ethyl propionate, butyl propionate, tetrahydrofuran.

In some embodiments, A, C, and D of the cathode active material are each independently any one element within the above respective ranges, and the B is at least two elements. This makes it possible to more easily and accurately control the composition of the cathode active material.

Optionally,
the A is any element selected from Mg and Nb; and/or,
the B is at least two elements selected from Fe, Ti, V, Co, and Mg, and is optionally Fe and one or more elements selected from Ti, V, Co, and Mg; and/or,
the C is S; and/or,
the D is F.

By selecting the Li-site doping elements within the above range, the lattice change rate during the delithiation process can be further reduced, thereby further improving the rate performance of the battery. By selecting the Mn-site doping elements within the above range, the electronic conductivity can be further improved and the lattice change rate can be further reduced, thereby improving the rate performance and gram capacity of the battery. By selecting the P-site doping elements within the above range, the rate performance of the battery can be further improved. By selecting the O-site doping elements within the above range, the side reactions at the interface can be further reduced, and the high-temperature performance of the battery can be improved.

In some embodiments, the x is selected from a range of between 0.001 and 0.005 (such as x is 0.001, 0.002, 0.003, 0.004 or 0.005); and/or, the y is selected from a range of between 0.01 and 0.5 (such as y is 0.01, 0.02, 0.03, 0.04, 0.05, 0.1, 0.2, 0.25, 0.30, 0.35, 0.40, 0.45 or 0.50), optionally selected from a range of between 0.25 and 0.5; and/or, the z is selected from a range of between 0.001 and 0.005 (such as z is 0.001, 0.002, 0.003, 0.004 or 0.005); and/or, the n is selected from the a of between 0.001 and 0.005 (such as n is 0.001, 0.002, 0.003, 0.004 or 0.005). By selecting the value of y within the above range, the gram capacity and rate performance of the material can be further improved. By selecting the value of x within the above range, the kinetic performance of the material can be further improved. By selecting the value of z within the above range, the rate performance of the secondary battery can be further improved. By selecting the value of n within the above range, the high temperature performance of the secondary battery can be further improved.

In some embodiments, the cathode active material satisfies the following conditions: (1-y): y is within a range of between 1 and 4, optionally within a range of between 1.5 and 3, and a: x is within a range of between 9 and 1100, optionally within a range of between 190 and 998. Here the y represents a sum of stoichiometric numbers of Mn-site doping elements. When the above conditions are met, the energy density and cycle performance of the cathode active material can be further improved.

In some embodiments, the cathode active material has a lattice change rate of less than 8%, optionally lattice change rate is less than 4%. By reducing the lattice change rate, Li ion transport can be made easier, that is, Li ion has a stronger mobility in the material, which is beneficial to improve the rate performance of the secondary battery. The lattice change rate can be measured by methods known in the art, such as X-ray diffraction (XRD).

In some embodiments, the cathode active material has a concentration of Li/Mn antisite defect of less than 2%, optionally the concentration of Li/Mn antisite defect is less than 0.5%. The Li/Mn antisite defect refers to the exchange of Li⁺ and Mn²⁺ positions in the LiMnPO₄ lattice. The concentration of Li/Mn antisite defect refers to the percentage of Li⁺ exchanged with Mn²⁺ in the cathode active material to the total Li⁺. The Mn²⁺ of antisite defects will hinder the transport of Li⁺, and it is beneficial to improve the gram capacity and rate performance of cathode active materials by reducing the concentration of Li/Mn antisite defect. The concentration of Li/Mn antisite defect can be measured by methods known in the art, such as XRD.

In some embodiments, the cathode active material has a surface oxygen valence state of less than -1.82, optionally between -1.89 and -1.98. By reducing the surface oxygen valence state, the interface side reaction between the cathode active material and the electrolyte solution can be reduced, thereby improving the cycle performance and high temperature stability of the secondary battery. The surface oxygen valence state can be measured by methods known in the art, for example by electron energy loss spectroscopy (EELS).

In some embodiments, optionally, the cathode active material has a compacted density at 3 tons (T) of higher than 2.0 g/cm³, optionally higher than 2.2 g/cm³. The higher the compacted density is, the greater the weight of the active material per unit volume is, therefore, it is more conducive to increasing the volumetric energy density of the battery core. In the present application, the compacted density can be measured, for example, according to GB/T 24533-2009.

In some embodiments, the cathode active material is coated with carbon. Thus, the conductivity of the cathode active material can be improved.

A second aspect of the present application further provides a battery module, the battery module includes a secondary battery, and the secondary battery is any one of the above-mentioned secondary batteries of the present application.

A third aspect of the present application further provides a battery pack, the battery pack includes a battery module, and the battery module is the above-mentioned battery module of the present application.

A fourth aspect of the present application also provides an electric device, which includes at least one of a secondary battery, a battery module, or a battery pack; and the secondary battery, battery module, and battery pack are the secondary battery, the battery module, the battery pack provided by the present application.

As a result, the battery module and the battery pack of the present application have higher cycle performance and rate characteristics, especially the high temperature stability has also been significantly improved, thereby providing an electric device having the secondary battery, the battery module, or the battery pack of the present application with high power cycle stability and high temperature running stability.

### BRIEF DESCRIPTION OF THE DRAWINGS

FIG. 1 is a schematic diagram of a secondary battery according to an embodiment of the present application;
FIG. 2 is an exploded view of the secondary battery according to an embodiment of the present application shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded view of the battery pack according to one embodiment of the present application shown in FIG. 4; and
FIG. 6 is a schematic diagram of an electric device in which a secondary battery is used as a power source according to an embodiment of the present application.

Explanations of reference numerals are as follows:
1 battery pack; 2 upper case; 3 lower case; 4 battery module; 5 secondary battery; 51 housing; 52 electrode assembly; and 53 top cover assembly.

### DETAILED DESCRIPTION

Hereinafter, embodiments of the secondary battery, battery module, battery pack, and power consumption device of the present application will be specifically disclosed in detail with reference to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following descriptions are provided for those skilled in the art to fully understand the present application, and are not intended to limit the subject matter described in the claims.

A "range" disclosed herein is defined in terms of a lower limit and an upper limit, and a given range is defined by selecting the lower limit and the upper limit that define a boundary of the particular range. The range defined in this manner may be inclusive or exclusive and may be combined arbitrarily, that is, any lower limit may be combined with any upper limit to form a range. For example, if ranges of 60-120 and 80-110 are listed for a particular parameter, it is understood that ranges of 60-110 and 80-120 are contemplated. Additionally, if minimum range values of 1 and 2 and maximum range values of 3, 4, and 5 are listed, the following ranges are all contemplated: 1-3, 1-4, 1-5, 2-3, 2-4 and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed in the present application, and "0-5" is only an abbreviated representation of the combination of these values. In addition, when expressing that a certain parameter is an integer ≥ 2, it is equivalent to the disclosure that the parameter is an integer such as 2, 3, 4, 5, 6, 7, 8, 9, 10, 11, 12, and so on.

Unless otherwise specified, all the implementation modes and optional implementation modes of the present application can be combined with each other to form new technical solutions.

Unless otherwise specified, all the technical features and optional technical features of the present application can be combined with each other to form a new technical solution.

Unless otherwise specified, all steps in the present application can be performed sequentially or randomly, preferably sequentially. For example, the method includes steps (a) and (b), which means that the method may include steps (a) and (b) performed in sequence, and may further include steps (b) and (a) performed in sequence. For example, when mentioning that the method may further include step (c), it means that step (c) may be added to the method in any order, for example, the method may include steps (a), (b), and (c), may also include steps (a), (c), and (b), may also include steps (c), (a), and (b), and so on.

Unless otherwise specified, the "comprising" and "including" mentioned in the present application mean open or closed. For example, the "comprising" and "including" may mean that other components not listed may be included or included, or only listed components may be included or included.

In the present application, the term "or" is inclusive unless otherwise specified. For example, the phrase "A or B" means "A, B, or both A and B". More specifically, any one of the following condition satisfy "A or B": A is true (or exists) and B is false (or does not exist); A is false (or does not exist) and B is true (or exists); or both A and B are true (or exist).

### [Secondary battery]

Secondary batteries, also known as rechargeable batteries or accumulators, refer to batteries that can be activated by charging the active materials and continue to be used after the battery is discharged.

Typically, a secondary battery includes a cathode piece, an anode piece, a separator, and an electrolyte. During the charging and discharging process of the battery, active ions (such as lithium ions) are repeatedly intercalated and deintercalated between the cathode and the anode. The separator is arranged between the cathode piece and the anode piece, which mainly plays a role in preventing the short circuit of the cathode and the anode, as well as preventing the active ions from passing therethrough. The electrolyte is between the cathode piece and the anode piece, and mainly plays the role of conducting active ions.

An embodiment of the present application provides a secondary battery, including a cathode piece and a non-aqueous electrolyte. The cathode piece includes a cathode active material, and the cathode active material has the chemical formula LiₐAₓMn_{1-y}B_{y}P_{1-z}C_{z}O₄₋ₙDₙ, in which, A includes one or more elements selected from the group consisting of Zn, Al, Na, K, Mg, Nb, Mo, and W; B includes one or more elements selected from the group consisting of Ti, V, Zr, Fe, Ni, Mg, Co, Ga, Sn, Sb, Nb, and Ge; C includes one or more elements selected from the group consisting of B (boron), S, Si, and N; D includes one or more elements selected from the group consisting of S, F, Cl, and Br; a is selected from a range of 0.9 to 1.1; x is selected from a range of 0.001 to 0.1; y is selected from a range of 0.001 to 0.5; z is selected from a range of 0.001 to 0.1; n is selected from a range of 0.001 to 0.1; and the cathode active material is electrically neutral;

the non-aqueous electrolyte includes a first lithium salt and a first additive, and the first lithium salt includes one or more selected from the group consisting of LiN(CₘF₂ₘ₊₁SO₂)(CₙF₂ₙ₊₁SO₂) and Li(FSO₂)₂N, m and n represent positive integers;
the first additive includes one or more of the compounds represented by Formula 1,
in which, Ri represents any one of a C₂-C₁₀ alkylene, a C₂-C₁₀ heteroalkylene, a C₆-C₁₈ arylene, a C₂-C₁₈ heteroarylene, a C₃-C₁₈ alicyclylene, a C₃-C₁₈ heteroalicyclylene, which are substituted by one or more Rₐ or are unsubstituted, and
Rₐ comprises one or more selected from a halogen atom, -CN, -NCO, -OH, -COOH, -SOOH, a -COOR_{b}, a C₂-C₁₀ alkyl, a C₂-C₁₀ alkenyl, a C₂-C₁₀ alkynyl, a C₂-C₁₀ oxaalkyl, and R_{b} is any one selected from C₁-C₁₀ alkyls.

The cathode piece generally includes a cathode current collector and a cathode film layer arranged on at least one surface of the cathode current collector, and the cathode film layer includes a cathode active material.

As an example, the cathode current collector has two opposing surfaces in its own thickness direction, and the cathode film layer is disposed on any one or both of the two opposing surfaces of the cathode current collector.

In some embodiments, a metal foil or a composite current collector can be used as the cathode current collector. For example, an aluminum foil can be used as the metal foil. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, and so on) on the polymer material substrate (such as polypropylene (PP), poly(ethylene terephthalate) (PET), polybutylene terephthalate (PBT), polystyrene (PS), polyethylene (PE), and other substrates).

The cathode active material of the present application is obtained by element doping in the compound LiMnPO₄, in which, A, B, C, and D represent elements doped at the Li site, the Mn site, the P site, and O site of the compound LiMnPO₄, respectively. Without wishing to be bound by theory, it is believed that the performance improvement of lithium manganese phosphate is related to reducing the lattice change rate of lithium manganese phosphate and reducing surface activity during lithium deintercalation. Reducing the lattice change rate can reduce the lattice constant difference between the two phases at the grain boundary, reduce the interfacial stress, and enhance the Li⁺ transport capacity at the interface, thereby improving the rate performance of the cathode active material. However, high surface activity can easily lead to serious interface side reactions, and aggravate gas production, electrolyte consumption, and interface damage, thereby affecting battery cycle performance. In the present application, the lattice change rate is reduced by Li-site and Mn-site doping. Mn-site doping can also effectively reduce surface activity, thereby inhibiting the dissolution of manganese ions and the interface side reaction between the cathode active material and the electrolyte. P-site doping makes the change rate of the Mn-O bond length faster, lowers the small polaron migration barrier of the material, and thus being beneficial to the electronic conductivity. O-site doping has good effect on reducing the side reactions at the interface. The doping of P site and O site also affects the dissolution of manganese ions and kinetic performance of antisite defects. Therefore, doping reduces the concentration of antisite defects in the material, improves the kinetic performance and gram capacity of the material, and can also change the morphology of the particles, thereby increasing the compaction density. The applicant unexpectedly found that by doping the Li site, Mn site, P site, and O site of the compound LiMnPO₄ with a specific element at a specific amount of the application at the same time, a significantly improved rate performance can be obtained, while significantly reducing dissolution of Mn and Mn-site doping elements results in significantly improved cycle performance and/or high-temperature stability, and the gram capacity and compacted density of the material can also be improved.

In addition, the non-aqueous electrolyte includes the first lithium salt as the main lithium salt, due to its excellent thermal stability and hydrolysis resistance, the first lithium salt can effectively reduce the acidity of the electrolyte, reduce the dissolution of manganese ions, and improve high-temperature cycle, and storage performance. The isocyanate-based compound represented by Formula 1 is introduced into the electrolyte, and can react with trace water in the battery to form -NHCOOH, prevent trace water from interacting with non-aqueous electrolyte to produce HF, further reduce the acidity of the electrolyte and reduce the dissolution of manganese ions, thereby improving high-temperature cycle and storage performance. Moreover, the isocyanate-based compound represented by Formula 1 can also form a uniform SEI film on the anode, reduce the reduction of dissolved Mn at the anode, and further improve the high-temperature cycle and storage performance.

In some embodiments, the non-aqueous electrolyte includes a first lithium salt and a first additive, and the first lithium salt exists as a main lithium salt. LiN(CₘF₂ₘ₊₁SO₂)(CₙF₂ₙ₊₁SO₂) in the first lithium salt may be selected from any corresponding specific substance in the existing technology. In some embodiments, m and n each independently represent 1, 2, or 3, to provide better thermal stability. For example, the first lithium salt is any one or more selected from the group consisting of LiN(CₘF₂ₘ₊₁SO₂)(CₙF₂ₙ₊₁SO₂) and Li(FSO₂)₂N, for example, the first lithium salt may be selected from the following substances: (fluorosulfonimide) (trifluoromethanesulfonimide) lithium Li(FSO₂)(CF₃SO₂)N, bis(trifluoromethanesulfonimide) lithium (LiN(CF₃SO₂)₂), bis(pentafluoroethanesulfonimide) lithium (LiN(C₂F₅SO₂)₂), (trifluoromethanesulfonimide) (pentafluoroethanesulfonimide) lithium (LiN(CF₃SO₂)(C₂F₅SO₂)), (trifluoromethanesulfonimide) (heptafluoropropanesulfonimide) lithium (LiN(CF₃SO₂)(C₃F₇SO₂)), (trifluoromethanesulfonimide) (nonafluorobutanesulfonimide) lithium (LiN(CF₃SO₂)(C₄F₉SO₂)), (pentafluoroethanesulfonimide) (heptafluoropropanesulfonimide) lithium LiN(C₂F₅SO₂)(C₃F₇SO₂), and Li(FSO₂)₂N.

The isocyanate compound shown in Formula 1 in the present application may be selected from the isocyanate compounds commonly used in electrolytes in the existing technology. In some embodiments, Ri represents any one of a C₂-C₁₀ alkylene, a C₂-C₁₀ oxaalkylene, a C₂-C₁₀ azaalkylene, phenylene, naphthylene, anthrylene, cyclobutylene, cyclopentylene, cyclohexylene, biphenylene, methylenediphenylene, which are substituted by one or more Rₐ or are unsubstituted; optionally, the R₁ represents any one of a C₂-C₆ alkylene, phenylene, naphthylene, anthracene, cyclobutylene, cyclopentylene, cyclohexylene, biphenylene, and methylenediphenylene, which are substituted by one or more Rₐ or are unsubstituted; and/or, the Rₐ comprises one or more selected from halogen atoms, -CN, C₂-C₃ alkyl; and/or, a number of Rₐ in the compound represented by the Formula 1 is 0, 1, 2, 3, or 4.

Optionally, the first additive includes one or more of the following compounds:

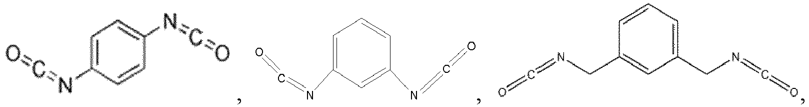

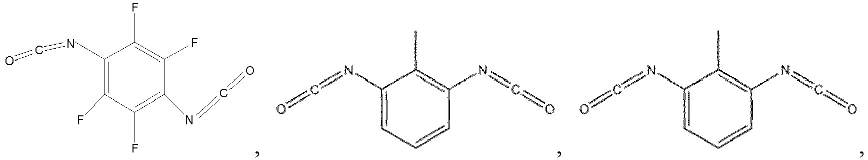

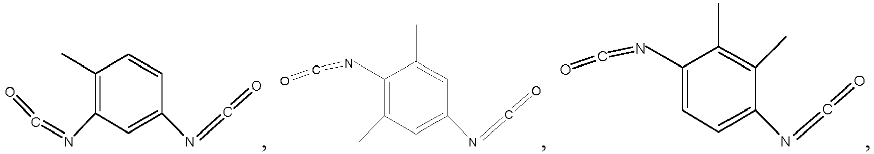

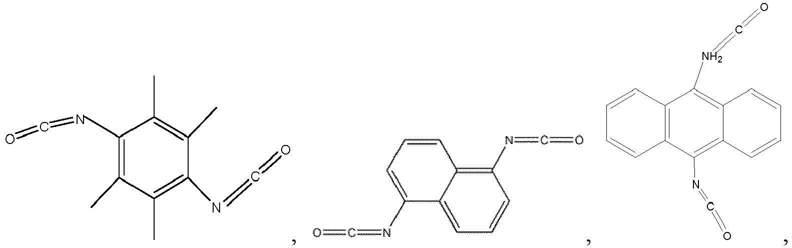

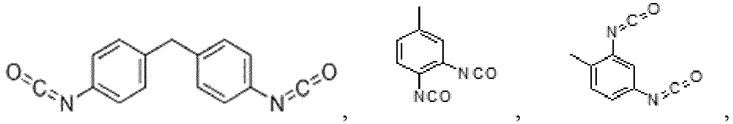

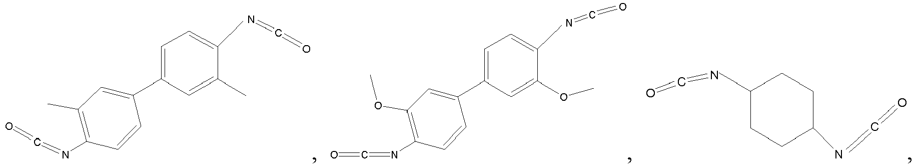

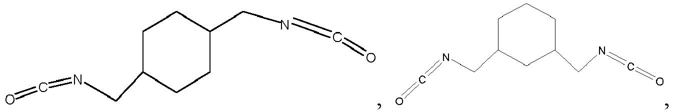

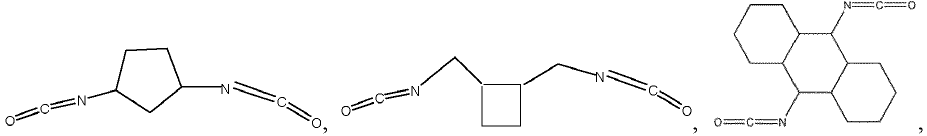

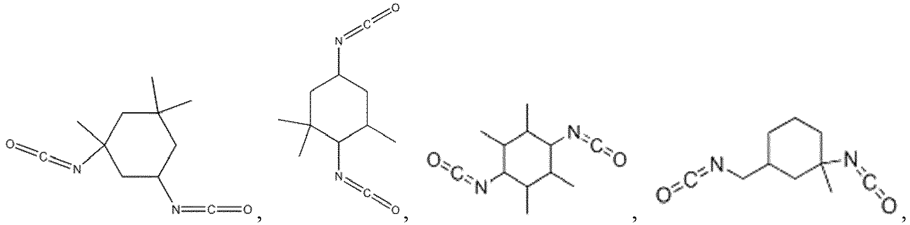

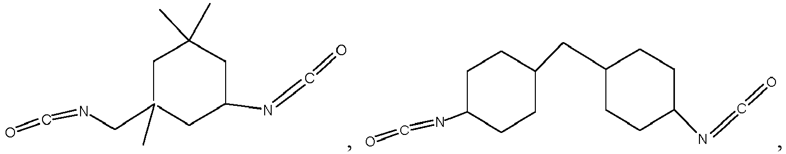

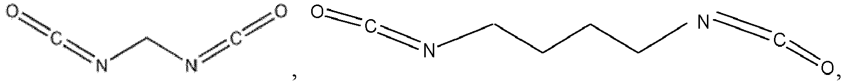

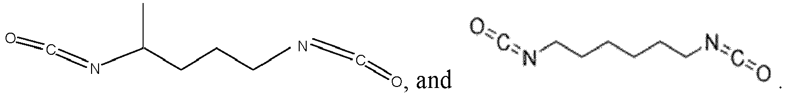

The compounds have good dispersion and solubility properties in the solvent of the non-aqueous electrolyte, and can fully react with trace water in the battery to form -NHCOOH, prevent trace water from interacting with non-aqueous electrolyte to produce HF, further reduce the acidity of the electrolyte and reduce the dissolution of manganese ions, thereby improving high-temperature cycle and storage performance. In addition, the isocyanate-based compounds are more likely to form a uniform SEI film on the anode, which is more conducive to reducing the reduction of dissolved Mn on the anode, and further improving high-temperature cycle and storage performance.

In some embodiments of the present application, when the first lithium salt is any one selected from LiN(CF₃SO₂)₂ and Li(FSO₂)₂N, the first additive is any one selected from the following compounds:

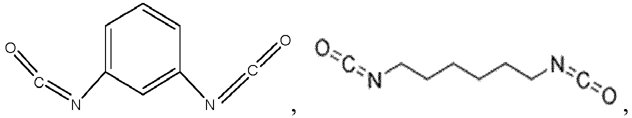

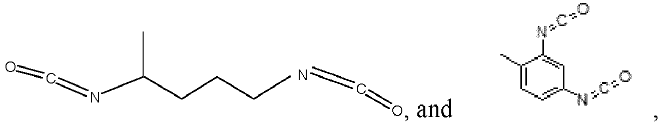

In this way, the advantages of the first lithium salt and the first additive are fully utilized and the acidity of the electrolyte and the dissolution of manganese ions are significantly reduced, and the high-temperature cycle and storage performance of the lithium-ion battery are significantly improved.

Although adopting the first lithium salt as the main lithium salt of the non-aqueous electrolyte can effectively improve the high-temperature cycle and storage performance of the secondary battery, the substance will corrode the lithium salt under certain conditions, such as when the operating voltage of the lithium-ion battery is > 4.2V, the problem of aluminum foil corrosion occurs. A possible mechanism is that after the original oxide film on the surface of the aluminum foil is destroyed in the electrolyte, aluminum having higher activity is exposed, and the aluminum is oxidized to produce Al³⁺ ions, then FSI- or TFSI- in the l electrolyte combines with Al³⁺ to form soluble Al(FSI)₃ or Al(TFSI)₃, and the dissolution of Al(FSI)₃ or Al(TFSI)₃ causes aluminum corrosion. Therefore, in order to alleviate the aluminum foil corrosion problem caused by the first lithium salt under high operating voltage, in some embodiments, based on the total weight of the non-aqueous electrolyte, the content of the first lithium salt is W1 wt. %, and W1 is between 0.1 and 48, which can be The selection range is between 5 and 20.

On the basis of controlling the content of the first lithium salt, in some embodiments, the lithium salt in the non-aqueous electrolyte can be supplemented by adding a second lithium salt, that is, the non-aqueous electrolyte further includes a second lithium salt, and the second lithium salt includes one or more selected from lithium difluorophosphate, lithium difluorodioxalate phosphate, lithium difluorooxalate borate, lithium bisoxalate borate, LiPF₆, and LiBF₄. The second lithium salt is added to the non-aqueous electrolyte as a lithium salt-type additive, which will be preferentially decomposed on a surface of an aluminum foil, and the insoluble precipitate formed by the combination of a decomposition product and the aluminum ion adheres to the surface of the aluminum foil, thereby forming a passivation film, which prevents the direct contact between the aluminum foil and the electrolyte, protects the aluminum foil, and in turn cooperates with the first lithium salt to improve high-temperature cycle and storage performance.

However, too much lithium salt-type additive will increase the impedance of the cathode and the anode, resulting in abnormal lithium-ion battery capacity and poor rate performance. In some embodiments, based on a total weight of the non-aqueous electrolyte, a content of the second lithium salt is W3 wt. %, W3 is between 0.01 and 20, optionally between 0.1 and 10 or between 0.3 and 5. When a weight ratio of the second lithium salt in the electrolyte is within the above range, not only is the corrosion of the aluminum foil inhibited, but also the high-temperature cycle and storage performance of the lithium-ion battery are improved, while not deteriorating the capacity and rate performance of the lithium-ion battery.

Although the first additive can form a uniform SEI film on the anode, reduce the reduction of dissolved Mn at the anode, and further improve the high-temperature cycle and storage performance; too much isocyanate-based compounds will increase the impedance of the anode, resulting in abnormal lithium-ion battery capacity and poor rate performance. Optionally, a content of the first additive is W2 wt. %, W2 is between 0.01 and 20, optionally between 0.1 and 10 or between 0.3 and 5, when a weight ratio of the first additive in the electrolyte is within the above range, not only is the acidity of the electrolyte lowered and the manganese ion dissolution reduced, but also the deterioration of the impedance of the anode is avoided, thereby improving the high-temperature cycle and storage performance of the lithium-ion battery, while not affecting the capacity and rate performance of the lithium-ion battery.

In some embodiments, the W2/W1 is defined as M, and M is between 0.001 and 3, optionally between 0.005 and 0.5. (W2+W3)/W1 is defined as N, and N is 0.01 to 2, optionally between 0.02 and 1.

When W2/W1 and (W2+W3)/W1 are within the above ranges, the three can play a better synergistic effect, ensuring that the acidity of the system is low, the dissolution of manganese ions is reduced, and the high-temperature cycle and storage performance of lithium ions are excellent; in addition, the corrosion of aluminum foil is effectively inhibited, the high-temperature cycle and storage performance of lithium-ion batteries are improved, while not deteriorating the capacity and rate performance of the lithium-ion battery.

In some embodiments, the non-aqueous electrolyte further includes a second additive, and the second additive includes one or more selected from the group consisting of a cyclic carbonate compound containing an unsaturated bond, a halogen-substituted saturated cyclic carbonate compound, a sulfate compound, a sulfite compound, a sultone compound, a disulfonic acid compound, a nitrile compound, an aromatic compound, an isocyanate compound, a phosphazene compound, a cyclic anhydride compound, a phosphorous acid ester compound, a phosphate ester compound, a borate ester compound. Those skilled in the art can select the corresponding second additive from the above substances according to actual needs, and the amount of the second additive in the non-aqueous electrolyte can also refer to the existing technology, which will not be repeated in the present application.

In some embodiments, the non-aqueous electrolyte further includes an organic solvent. The type of the organic solvent is not particularly limited and can be selected according to actual needs. Specifically, the organic solvent includes one or more of a cyclic carbonate compound, a chain carbonate compound, and a carboxylate compound. Operationally, the organic solvent includes one or more of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl formate, methyl acetate, ethyl acetate, propyl acetate, methyl propionate, ethyl propionate, butyl propionate, tetrahydrofuran.

In some embodiments, A, C, and D of the cathode active material are each independently any element within the above respective ranges, and the B is at least two elements. This makes it possible to more easily and accurately control the composition of the cathode active material.
the A is any element selected from Mg and Nb; and/or,
the B is at least two elements selected from Fe, Ti, V, Co, and Mg, and is optionally Fe and one or more elements selected from Ti, V, Co, and Mg; and/or,
the C is S; and/or,
the D is F.

By selecting the Li-site doping elements within the above range, the lattice change rate during the delithiation process can be further reduced, thereby further improving the rate performance of the battery. By selecting the Mn-site doping elements within the above range, the electronic conductivity can be further improved and the lattice change rate can be further reduced, thereby improving the rate performance and gram capacity of the battery. By selecting the P-site doping elements within the above range, the rate performance of the battery can be further improved. By selecting the O-site doping elements within the above range, the side reactions at the interface can be further reduced, and the high-temperature performance of the battery can be improved.

In some embodiments, the x is selected from a range of between 0.001 and 0.005; and/or, the y is selected from a range of between 0.01 and 0.5, optionally selected from a range of between 0.25 and 0.5; and/or, the z is selected from a range of between 0.001 and 0.005; and/or, the n is selected from the a of between 0.001 and 0.005. By selecting the value of y within the above range, the gram capacity and rate performance of the material can be further improved. By selecting the value of x within the above range, the kinetic performance of the material can be further improved. By selecting the value of z within the above range, the rate performance of the secondary battery can be further improved. By selecting the value of n within the above range, the high temperature performance of the secondary battery can be further improved.

In some embodiments, the cathode active material satisfies the following conditions: (1-y): y is within a range of between 1 and 4, optionally within a range of between 1.5 and 3, and a: x is within a range of between 9 and 1100, optionally within a range of between 190 and 998. Here the y represents a sum of stoichiometric numbers of Mn-site doping elements. When the above conditions are met, the energy density and cycle performance of the cathode active material can be further improved.

In some embodiments, the cathode active material has a lattice change rate of less than 8%, optionally lattice change rate is less than 4%. By reducing the lattice change rate, Li ion transport can be made easier, that is, Li ion has a stronger mobility in the material, which is beneficial to improve the rate performance of the secondary battery. The lattice change rate can be measured by methods known in the art, such as X-ray diffraction (XRD).

In some embodiments, the cathode active material has a concentration of Li/Mn antisite defect of less than 2%, optionally the concentration of Li/Mn antisite defect is less than 0.5%. The Li/Mn antisite defect refers to the exchange of Li⁺ and Mn²⁺ positions in the LiMnPO₄ lattice. The concentration of Li/Mn antisite defect refers to the percentage of Li⁺ exchanged with Mn²⁺ in the cathode active material to the total Li⁺. The Mn²⁺ of antisite defects will hinder the transport of Li⁺, and it is beneficial to improve the gram capacity and rate performance of cathode active materials by reducing the concentration of Li/Mn antisite defect. The concentration of Li/Mn antisite defect can be measured by methods known in the art, such as XRD.

In some embodiments, the cathode active material has a surface oxygen valence state of less than -1.82, optionally between -1.89 and -1.98. By reducing the surface oxygen valence state, the interface side reaction between the cathode active material and the electrolyte solution can be reduced, thereby improving the cycle performance and high temperature stability of the secondary battery. The surface oxygen valence state can be measured by methods known in the art, for example by electron energy loss spectroscopy (EELS).

In some embodiments, optionally, the cathode active material has a compacted density at 3 tons (T) of higher than 2.0 g/cm³, optionally higher than 2.2 g/cm³. The higher the compacted density is, the greater the weight of the active material per unit volume is, therefore, it is more conducive to increasing the volumetric energy density of the battery core. In the present application, the compacted density can be measured, for example, according to GB/T 24533-2009.

In some embodiments, the cathode active material is coated with carbon. Thus, the conductivity of the cathode active material can be improved.

The following is an explanation of the preparation method for the cathode active material of the present application, but the following explanation is only exemplary explanation. Those skilled in the art can use other implementable methods to prepare the cathode active material of the present application.

In some embodiments, the preparation method of the cathode active material comprises the following steps: step (1): dissolving and stirring a source of manganese, a source of the element B and an acid in a solvent to generate a suspension of manganese salt doped with the element B, filtering the suspension and drying a resulting filter cake to obtain the manganese salt doped with the element B; step (2): adding a source of lithium, a source of phosphorus, a source of the element A, a source of the element C, and a source of the element D, a solvent, and the manganese salt doped with the element B obtained from step (1) to a reaction vessel, and grinding and mixing a resulting mixture to obtain a slurry; step (3): transferring the slurry obtained from step (2) to a spray drying device for spray drying and granulation to obtain particles; and step (4): sintering the particles obtained from step (3) to obtain the cathode active material.

Optionally, the stirring in the step (1) is conducted at a temperature range of 60-120°C, and/or, the stirring in the step (1) is conducted at a stirring rate of 200-800 rpm.

Optionally, the grinding and mixing in the above step (2) is conducted for 8-15 hrs.

Optionally, the sintering of the step (4) is conducted at a temperature range of 600 to 900°C for 6-14 hrs.

Optionally, the source of the element A is at least one selected from an elemental substance, an oxide, a phosphate, an oxalate, a carbonate, and a sulfates of the element A; the source of element B is at least one selected from an elemental substance, an oxide, a phosphate, an oxalate, a carbonate, and a sulfate of the element B; the source of element C is at least one selected from a sulfate, a borate, a nitrate, and a silicate of the element C; and the source of element D is at least one selected from an elemental substance and an ammonium salt of the element D.

In some embodiments, the cathode film layer may further include other cathode active materials known in the art for secondary batteries. As an example, the cathode active material may include at least one of the following materials: olivine-structured lithium-containing phosphate, lithium transition metal oxide, and their respective modified compounds. However, the present application is not limited to these materials, and other conventional materials suitable for cathode active materials of the secondary batteries can also be used. These cathode active materials may be used alone or in combination of two or more. Examples of lithium transition metal oxides may include, but are not limited to, at least one of lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, and modified compounds thereof. Examples of the olivine-structured lithium-containing phosphate may include, but are not limited to, at least one of lithium iron phosphate (such as LiFePO₄, which may also be abbreviated as LFP), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

In some embodiments, the cathode film layer may optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the cathode film layer may also optionally include a conductive agent. As an example, the conductive agent may include at least one of a superconducting carbon, an acetylene black, a carbon black, a Ketjen black, carbon dots, carbon nanotubes, graphene, and carbon nanofibers.

In some embodiments, the cathode piece can be prepared as follows: dispersing the components for preparing the cathode piece, such as the cathode active material, the conductive agent, the binder, and any other components, in a solvent (such as N -methylpyrrolidone) to form a cathode slurry; coating the cathode slurry on the cathode current collector; and performing drying, cold pressing, and other processes, to obtain the cathode piece.

### [Anode piece]

The anode piece includes an anode current collector and an anode film layer arranged on at least one surface of the anode current collector, and the anode film layer includes an anode active material.

As an example, the anode current collector has two opposing surfaces in its own thickness direction, and the anode film layer is arranged on any one or both of the two opposing surfaces of the anode current collector.

In some embodiments, a metal foil or a composite current collector can be used as the anode current collector. For example, a copper foil can be used as the metal foil. The composite current collector may include a polymer material substrate and a metal layer formed on at least one surface of polymer material substrate. The composite current collectors can be formed by forming a metal material (copper, copper alloy, nickel, nickel alloy, titanium, titanium alloy, silver, and silver alloy, and so on) on the polymer material substrate (such as polypropylene (PP), poly(ethylene terephthalate) (PET), polybutylene terephthalate (PBT), polystyrene (PS), polyethylene (PE), and other substrates).

In some embodiments, the anode active material can be an anode active material known in the art of batteries. As an example, the anode active material may include at least one of the following materials: artificial graphite, natural graphite, soft carbon, hard carbon, silicon-based material, tin-based material, lithium titanate, and the like. The silicon-based material may be at least one selected from elemental silicon, a silicon-oxygen compound, a silicon-carbon composite, a silicon-nitrogen composite, and a silicon alloy. The tin-based material can be at least one selected from of elemental tin, a tin oxide, and a tin alloy. However, the present application is not limited to these materials, and other conventional materials suitable for the anode active materials of the batteries can also be used. These anode active materials may be used alone or in combination of two or more.

In some embodiments, the anode film layer may further optionally include a binder. As an example, the binder may be at least one selected from a styrene-butadiene rubber (SBR), a polyacrylic acid (PAA), a sodium polyacrylate (PAAS), a polyacrylamide (PAM), a polyvinyl alcohol (PVA), a sodium alginate (SA), a polymethacrylic acid (PMAA), and a carboxymethyl chitosan (CMCS).

In some embodiments, the anode film layer may also optionally include a conductive agent. As an example, the conductive agent may include at least one of a superconducting carbon, an acetylene black, a carbon black, a Ketjen black, carbon dots, carbon nanotubes, graphene, and carbon nanofibers.

In some embodiments, the anode film layer may optionally include other additives, such as a thickener (such as, a sodium carboxymethylcellulose (CMC-Na)) and the like.

In some embodiments, the anode piece can be prepared as follows: dispersing the components for preparing the anode piece, such as the anode active material, the conductive agent, the binder, and any other components, in a solvent (such as a deionized water) to form an anode slurry; coating the anode slurry on the anode current collector, and performing drying, cold pressing, and other processes, to obtain the anode piece.

### [Separator]

In some embodiments, a separator is further included in the secondary battery. The present application has no particular limitation on the type of the separator, and any known separator in a porous structure having good chemical stability and mechanical stability can be selected.

In some embodiments, the material for the separator can be at least one selected from a glass fiber, a non-woven fabric, a polyethylene, a polypropylene, and a polyvinylidene fluoride. The separator can be a single-layer film or a multi-layer composite film, which is not particularly limited herein. When the separator is a multilayer composite film, the materials of each layer may be the same or different, which is not particularly limited herein.

In some embodiments, the cathode piece, the anode piece, and the separator can be made into an electrode assembly through a winding process or a lamination process.

In some embodiments, the secondary battery may include an outer package. The outer package can be used to package the electrode assembly and THE electrolyte.

In some embodiments, the outer packaging of the secondary battery may be a hard case, such as a hard plastic case, aluminum case, steel case, and the like. The outer packaging of the secondary battery may also be a soft case, such as a bag-type soft case. The material of the soft case may be plastic, and examples of the plastic include a polypropylene, a polybutylene terephthalate, a polybutylene succinate, and the like.

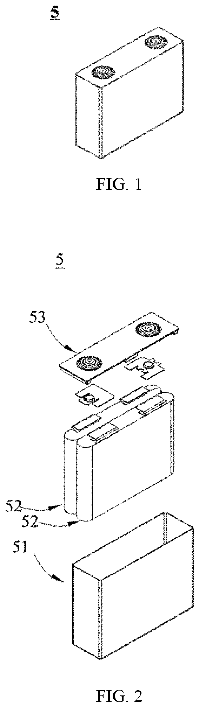

The present application has no special limitation on the shape of the secondary battery, which may be cylindrical, square, or any other shape. For example, FIG. 1 shows a square-shaped secondary battery 5 as an example.

In some embodiments, referring to FIG. 2, the outer package may include a housing 51 and a cover 53. The housing 51 may include a bottom plate and a side plate connected to the bottom plate, and the bottom plate and the side plates enclose to form an accommodating cavity. The housing 51 has an opening communicating with the accommodating cavity, and the cover plate 53 can cover the opening to enclose the accommodating cavity. The cathode piece, the anode piece, and the separator can be formed into an electrode assembly 52 through a winding process or a lamination process. The electrode assembly 52 is packaged in the accommodating cavity. Electrolyte is infiltrated in the electrode assembly 52. The number of electrode assemblies 52 contained in the secondary battery 5 can be one or more, which may be selected by those skilled in the art according to specific actual needs.

In some embodiments, the secondary battery can be assembled into a battery module, and the number of secondary batteries contained in the battery module can be one or more, and the specific number can be selected by those skilled in the art according to the application and capacity of the battery module.

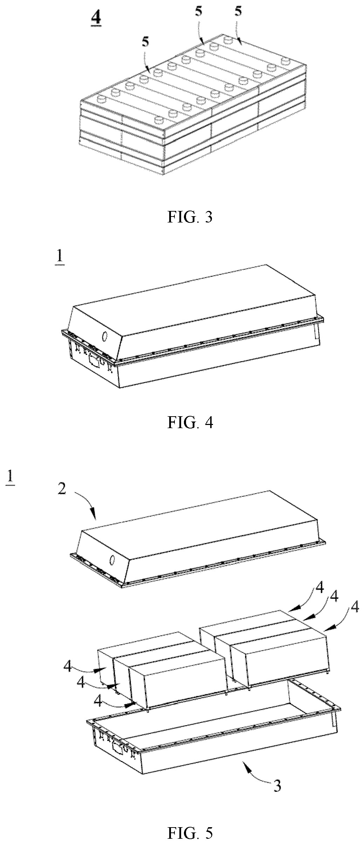

FIG. 3 is a battery module 4 as an example. Referring to FIG. 3, in the battery module 4, a plurality of secondary batteries 5 may be arranged in sequence along a length direction of the battery module 4. It can be understood any other arrangement manners can also be adopted. Furthermore, the plurality of secondary batteries 5 may be fixed by fasteners.

Optionally, the battery module 4 may further include a case having an accommodation space, in which a plurality of secondary batteries 5 are accommodated.

In some embodiments, the battery modules can also be assembled into a battery pack, and the number of battery modules contained in the battery pack can be one or more, and the specific number can be selected by those skilled in the art according to the application and capacity of the battery pack.

FIGS. 4-5 show a battery pack 1 as an example. Referring to FIGS. 4- 5, the battery pack 1 may include a battery case and a plurality of battery modules 4 disposed in the battery case. The battery case includes an upper case 2 and a lower case 3, the upper case 2 can cover the lower case 3 and form an enclosed space for accommodating the battery modules 4. The plurality of battery modules 4 can be arranged in the battery case in any manner.

In addition, the present application also provides an electric device, which includes at least one of the secondary battery, the battery module, or the battery pack provided in the present application. The secondary battery, the battery module, or the battery pack can be used as a power source of the electric device, and can also be used as an energy storage unit of the electric device. The electric devices may include mobile devices (such as mobile phones, laptops, and the like), electric vehicles (such as pure electric vehicles, hybrid electric vehicles, plug-in hybrid electric vehicles, electric bicycles, electric scooters, electric golf carts, and the like), electric trucks, and the like), electric trains, ships and satellites, energy storage systems, and the like, but not limited thereto.

The secondary battery, the battery module, or the battery pack can be selected as the electric device according to the use requirements.

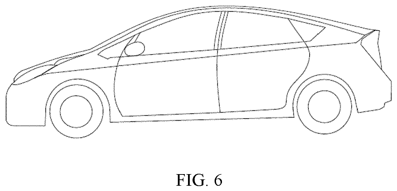

FIG. 6 is an example of an electric device. The electric device is a pure electric vehicle, a hybrid electric vehicle, or a plug-in hybrid electric vehicle. In order to meet the high power and high energy density requirements of the electric device for the secondary battery, a battery pack, or a battery module may be used.

### [Examples]

Hereinafter, examples of the present application will be described. The embodiments described below are exemplary and are only used for explaining the present application, and should not be construed as limiting the present application. If no specific technique or condition is indicated in the examples, it shall be carried out according to the technique or condition described in the literature in this field or according to the product specification. The reagents or instruments used, if not indicated by the manufacturer, are all commercially available conventional products.

The first additive is selected from the following compounds: 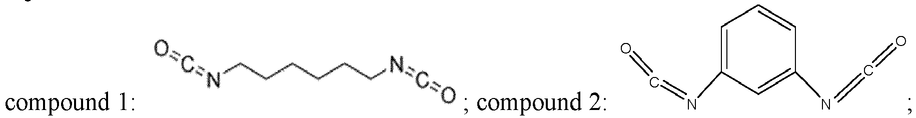 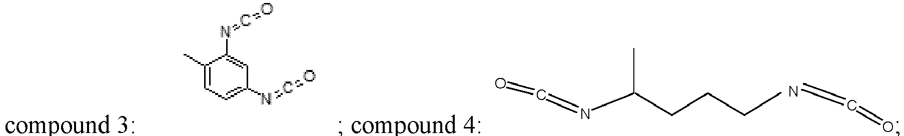 and

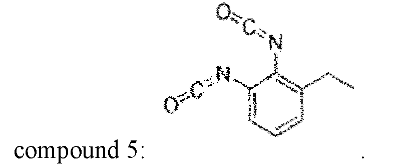

### Example 1

### 1) Preparation of cathode active material

Preparation of doped manganese oxalate: 1.3 mol of MnSO₄•H₂O, 0.7 mol of FeSO₄•H₂O were fully mixed in a mixer for 6 hrs. The mixture was transferred to a reaction kettle, to which, 10 L of deionized water and 2 mol of oxalic acid dihydrate (calculated as oxalic acid) were added. The reaction kettle was heated to 80°C and stirred at 600 rpm for 6 hrs until the reaction was terminated (no bubbles were generated), and a suspension of Fe-doped manganese oxalate was obtained. Then the suspension was filtered, the filter cake was dried at 120°C, and then ground to obtain Fe-doped manganese oxalate particles having a median diameter Dv50 of about 100 nm.

Preparation of doped lithium manganese phosphate: 1mol of the manganese oxalate particles, 0.497 mol of lithium carbonate, 0.001 mol of Mo(SO₄)₃, a 85% phosphoric acid aqueous solution containing 0.999 mol of phosphoric acid, 0.001 mol of H₄SiO₄, 0.0005 mol of NH₄HF₂ and 0.005 mol of sucrose were added to 20 L deionized water. A resulting mixture was transferred to a sand mill and thoroughly ground and stirred for 10 hrs to obtain a slurry. The slurry was transferred to a spray drying device for spray drying and granulation. The drying was performed at a drying temperature of 250°C for 4 hrs to obtain particles. In a protective atmosphere of nitrogen (90 vol%) + hydrogen (10 vol%), the particles were sintered at 700°C for 10 hrs to obtain carbon-coated Li_{0.994}Mo_{0.001}Mn_{0.65}Fe_{0.35}P_{0.999}Si_{0.001}O_{3.999}F_{0.001}. The cathode active material was detected by inductively coupled plasma emission spectrometry (ICP).

### 2) Preparation of button battery

The cathode active material, polyvinylidene fluoride (PVDF), and acetylene black were added to N-methylpyrrolidone (NMP) at a weight ratio of 90: 5: 5, and a resulting mixture was stirred in a drying room to form a slurry. The slurry was coated on the aluminum foil, dried and cold-pressed to form a cathode piece. The coating amount was 0.2 g/cm², and the compacted density was 2.0 g/cm³.

Lithium sheet was used as the anode. A solution of ethylene carbonate (EC), diethyl carbonate (DEC), and dimethyl carbonate (DMC) in a volume ratio of 1: 1: 1 and added with Li(FSO₂)₂N (the first lithium salt, having a weight content in the electrolyte of 15%), compound 1 (the first additive, having a weight content in the electrolyte of 1%), and 1 mol/L LiPF₆ (the second lithium salt, having a weight content in the electrolyte of 3%) was used as the electrolyte, in which, a total amount of the first lithium salt and the first additive of the cathode active material in the unit area was controlled to be 5.4 mg/m². The lithium sheet, the above electrolyte, together with the cathode piece prepared in the above were used to assemble a button battery (hereinafter also referred to as "button battery") in a button battery cabinet.

### 3) Preparation of full battery

The cathode active material, acetylene black as the conductive agent, and polyvinylidene fluoride (PVDF) as the binder were mixed at a weight ratio of 92: 2.5: 5.5 in an N-methylpyrrolidone solvent system, and a mixture was then coated on an aluminum foil, dried, and cold-pressed to obtain a cathode piece. A coating amount was 0.4 g/cm², and a compacted density was 2.4 g/cm³.

The artificial graphite and the hard carbon as the anode active materials, the acetylene black as the conductive agent, the styrene-butadiene rubber (SBR) as the binder, the sodium carboxymethyl cellulose (CMC) as the thickener were uniformly mixed according to a weight ratio of 90: 5: 2: 2: 1 in deionized water, a resulting mixture was coated on a copper foil, dried, and cold-pressed to obtain an anode piece. The coating amount was 0.2 g/cm², and the compacted density was 1.7 g/cm³.

A polyethylene (PE) porous polymer film was used as the separator. The cathode piece, the separator film, and the anode piece were sequentially stacked, so that the separator is arranged in the middle of the cathode and the anode to play the role of isolation, and a bare battery cell was obtained by winding. The bare battery cell was placed in an outer package, to which the above electrolyte was injected and packaged to obtain a full battery (hereinafter also referred to as "full battery").

### Example 2

Conditions of this Example were the same as those in Example 1 except that in "1) Preparation of cathode active material", the amount of high-purity Li₂CO₃ was changed to 0.4885 mol, Mo(SO₄)₃ was replaced by MgSO₄, the amount of FeSO₄•H₂O was changed to 0.68 mol, 0.02 mol of Ti(SO₄)₂ was additionally added in the preparation of the doped manganese oxalate, and H₄SiO₄ was replaced by HNO₃.

### Example 3

Conditions of this Example were the same as those in Example 1 except that in "1) Preparation of cathode active material", the amount of high-purity Li₂CO₃ was changed to 0.496 mol, Mo(SO₄)₃ was replaced by W(SO₄)₃, and H₄SiO₄ was replaced by H₂SO₄.

### Example 4

Conditions of this Example were the same as those in Example 1 except that in "1) Preparation of cathode active material", the amount of high-purity Li₂CO₃ was changed to 0.4985 mol, 0.001mol of Mo(SO₄)₃ was replaced by 0.0005mol of Al₂(SO₄)₃, and NH₄HF₂ was replaced by NH₄HCl₂.

### Example 5

Conditions of this Example were the same as those in Example 1 except that in "1) Preparation of cathode active material", 0.7 mol of FeSO₄•H2O was changed to 0.69 mol, and 0.01 mol of VCl₂ was additionally added during preparation of the doped manganese oxalate, the amount of Li₂CO₃ was changed to 0.4965 mol, and 0.001 mol of Mo(SO₄)₃ was replaced with 0.0005 mol of Nb₂(SO₄)₅, and H₄SiO₄ was replaced with H₂SO₄.

### Example 6

Conditions of this Example were the same as those in Example 1 except that in "1) Preparation of cathode active material", the amount of H₂O was changed to 0.68 mol, and 0.01 mol of VCl₂ and 0.01 mol of MgSO₄ were additionally added during preparation of the doped manganese oxalate, the amount of Li₂CO₃ was changed to 0.4965 mol, and 0.001 mol of Mo(SO₄)₃ was changed to 0.0005 mol Nb₂(SO₄)₅, and H₄SiO₄ was replaced with H₂SO₄.

### Example 7

Conditions of this Example were the same as those in Example 6 except that in "1) Preparation of cathode active material", MgSO₄ was replaced by CoSO₄.

### Example 8

Conditions of this Example were the same as those in Example 6 except that in "1) Preparation of cathode active material", MgSO₄ was replaced by NiSO₄.

### Example 9

Conditions of this Example were the same as those in Example 1 except that in "1) Preparation of cathode active material", the amount of FeSO₄•H₂O was changed to 0.698 mol, and 0.002 mol of Ti(SO₄)₂ was additionally added during preparation of the doped manganese oxalate, the amount of Li₂CO₃ was changed to 0.4955 mol, and 0.001mol of Mo(SO₄)₃ was replaced with 0.0005 mol of Nb₂(SO₄)₅, H₄SiO₄ was replaced with H₂SO₄, and NH₄HF₂ was replaced with NH₄HCl₂.

### Example 10

Conditions of this Example were the same as those in Example 1 except that in "1) Preparation of cathode active material", the amount of FeSO₄•H₂O was changed to 0.68 mol, and 0.01 mol of VCl₂ and 0.01 mol of MgSO₄ were additionally added during preparation of the doped manganese oxalate, the amount of Li₂CO₃ was changed to 0.4975 mol, and 0.001 mol of Mo(SO₄)₃ was changed to 0.0005 mol of Nb₂(SO₄)₅, and NH₄HF₂ was replaced with NH₄HBr₂.

### Example 11

Conditions of this Example were the same as those in Example 1 except that in "1) Preparation of cathode active material", the amount of FeSO₄•H₂O was changed to 0.69 mol, and 0.01 mol of VCl₂ was additionally added during the preparation of the doped manganese oxalate, the amount of Li₂CO₃ was changed to 0.499 mol, Mo(SO₄)₃ was replaced by MgSO₄ and NH₄HF₂ was replaced by NH₄HBr₂.

### Example 12

Conditions of this Example were the same as those in Example 1 except that in "1) Preparation of cathode active material", the amount of MnSO₄•H₂O was changed to 1.36 mol, the amount of FeSO₄•H₂O was changed to 0.6 mol, and 0.04 mol of VCl₂ was additionally added during the preparation of the doped manganese oxalate, the amount of Li₂CO₃ was changed to 0.4985 mol, Mo(SO₄)₃ was replaced by MgSO₄, and H₄SiO₄ was replaced by HNO₃.

### Example 13

Conditions of this Example were the same as those in Example 12 except that in "1) Preparation of cathode active material", the amount of MnSO₄•H₂O was changed to 1.16mol, the amount of FeSO₄•H₂O was changed to 0.8 mol.

### Example 14

Conditions of this Example were the same as those in Example 12 except that in "1) Preparation of cathode active material", the amount of MnSO₄•H₂O was changed to 1.3 mol, and the amount of VCl₂ was changed to 0.1 mol.

### Example 15

Conditions of this Example were the same as those in Example 1 except that in "1) Preparation of cathode active material", the amount of MnSO₄•H₂O was changed to 1.2 mol, and 0.1 mol of VCl₂ was additionally added during the preparation of the doped manganese oxalate, the amount of Li₂CO₃ was changed to 0.494 mol, and 0.001 mol of Mo(SO₄)₃ was replaced with 0.005 mol of MgSO₄, and H₄SiO₄ was replaced with H₂SO₄.

### Example 16

Conditions of this Example were the same as those in Example 1 except that in "1) Preparation of cathode active material", the amount of MnSO₄•H₂O was changed to 1.2 mol, and 0.1 mol of VCl₂ was additionally added during the preparation of the doped manganese oxalate, the amount of Li₂CO₃ was changed to 0.467 mol, and 0.001 mol of Mo(SO₄)₃ was replaced with 0.005 mol of MgSO₄, 0.001 mol of H₄SiO₄ was changed to 0.005 mol of H₂SO₄, and 1.175 mol of a 85% phosphoric acid was changed to 1.171 mol of a 85% phosphoric acid concentration.

### Example 17

Conditions of this Example were the same as those in Example 1 except that in "1) Preparation of cathode active material", the amount of MnSO₄•H₂O was changed to 1.2 mol, and 0.1 mol of VCl₂ was additionally added during the preparation of the doped manganese oxalate, the amount of Li₂CO₃ was changed to 0.492 mol, and 0.001 mol of Mo(SO₄)₃ was replaced by 0.005 mol of MgSO₄, H₄SiO₄ was replaced by H₂SO₄, and 0.0005 mol of NH₄HF₂ was change to 0.0025 mol.

### Example 18

Conditions of this Example were the same as those in Example 1 except that in "1) Preparation of cathode active material", the amount of FeSO₄•H₂O was changed to 0.5 mol, 0.1 mol of VCl₂ and 0. 1 mol of CoSO₄ were additionally added during the preparation of the doped manganese oxalate, the amount of Li₂CO₃ was changed to 0.492 mol, 0.001 mol of Mo(SO₄)₃ was changed to 0.005 mol MgSO₄, H₄SiO₄ was changed to H₂SO₄, and 0.0005 mol of NH₄HF₂ was changed to 0.0025 mol.

### Example 19

Conditions of this Example were the same as those in Example 18 except that in "1) Preparation of cathode active material", the amount of FeSO₄•H₂O was changed to 0.4 mol, and 0. 1mol of CoSO₄ was changed to 0.2mol.

### Example 20

Conditions of this Example were the same as those in Example 1 except that in "1) Preparation of cathode active material", the amount of MnSO₄•H₂O is changed to 1.5mol, the amount of FeSO₄•H₂O was changed to 0.1mol, and the amount of CoSO₄ was changed to 0.3 mol.

### Example 21

Conditions of this Example were the same as those in Example 1 except that in "1) Preparation of cathode active material", 0. 1 mol of CoSO₄ was replaced by 0.1 mol of NiSO₄.

### Example 22

Conditions of this Example were the same as those in Example 1 except that in "1) Preparation of cathode active material", the amount of MnSO₄•H₂O was changed to 1.5 mol, the amount of FeSO₄•H₂O was changed to 0.2 mol, and 0. 1 mol of CoSO₄ was replaced with 0.2 mol of NiSO₄.

### Example 23

Conditions of this Example were the same as those in Example 1 except that in "1) Preparation of cathode active material", the amount of MnSO₄•H₂O was changed to 1.4 mol, the amount of FeSO₄•H₂O was changed to 0.3 mol, and the amount of CoSO₄ was changed to 0.2 mol.

### Example 24

Conditions of this Example were the same as those in Example 1 except that in "1) Preparation of cathode active material", 1.3 mol of MnSO₄•H₂O was changed to 1.2 mol, 0.7 mol of FeSO₄•H₂O was changed to 0.5 mol, 0.1 mol of VCl₂ and 0.2 mol of CoSO₄ were additionally added during the preparation of the doped manganese oxalate, the amount of Li₂CO₃ was changed to 0.497 mol, 0.001 mol of Mo(SO₄)₃ was replaced with 0.005 mol of MgSO₄, H₄SiO₄ was replaced with H₂SO₄, and 0.0005 mol of NH₄HF₂ was changed into 0.0025 mol.

### Example 25

Conditions of this Example were the same as those in Example 1 except that in "1) Preparation of cathode active material", the amount of MnSO₄•H₂O was changed to 1.0 mol, the amount of FeSO₄•H₂O was changed to 0.7 mol, and the amount of CoSO₄ was changed to 0.2 mol.

### Example 26

Conditions of this Example were the same as those in Example 1 except that in "1) Preparation of cathode active material", the amount of MnSO₄•H₂O was changed to 1.4 mol, the amount of FeSO₄•H₂O was changed to 0.3 mol, and 0.1 mol of VCl₂ and 0.2 mol of CoSO₄ were additionally added during the preparation of the doped manganese oxalate, the amount of Li₂CO₃ was changed to 0.4825 mol, and the amount of 0.001 mol of Mo(SO₄)₃ was changed to 0.005 mol MgSO₄, the amount of H₄SiO₄ was changed to 0.1 mol, the amount of phosphoric acid was changed to 0.9 mol, and the amount of NH₄HF₂ was changed to 0.04 mol.

### Example 27

Conditions of this Example were the same as those in Example 1 except that in "1) Preparation of cathode active material", the amount of MnSO₄•H₂O was changed to 1.4mol, the amount of FeSO₄•H₂O was changed to 0.3 mol, and 0.1 mol of VCl₂ and 0.2 mol of CoSO₄ were additionally added during the preparation of the doped manganese oxalate, the amount of Li₂CO₃ was changed to 0.485 mol, 0.001 mol of Mo(SO₄)₃ was changed to 0.005 mol MgSO₄, the amount of H₄SiO₄ was changed to 0.08 mol, the amount of phosphoric acid was changed to 0.92 mol, and the amount of NH₄HF₂ was changed to 0.05 mol.

### Comparative Example 1

Preparation of manganese oxalate: 1 mol of MnSO₄•H₂O was added to a reaction kettle, and 10 L of deionized water and 1mol of oxalic acid dihydrate (calculated as oxalic acid) were added. The reaction kettle was heated to 80°C, stirred at 600 rpm for 6 hrs until the reaction was terminated (no bubbles were generated), so as to obtain a manganese oxalate suspension. After that the suspension was filtered, a resulting filter cake was dried at 120°C, then ground to obtain manganese oxalate particles having a median particle diameter Dv50 of 50-200 nm.

Preparation of lithium manganese phosphate: 1 mol of the above manganese oxalate particles, 0.5 mol of lithium carbonate, 85% phosphoric acid aqueous solution containing 1 mol of phosphoric acid, and 0.005 mol of sucrose were added to 20 L of deionized water. A resulting mixture was transferred to a sand mill and thoroughly ground and stirred for 10 hrs to obtain a slurry. The slurry was transferred to a spray drying device for spray drying and granulation during which, a drying temperature was 250°C, and a drying time was 4 hrs, and particles were obtained. In a protective atmosphere of nitrogen (90 vol%) + hydrogen (10 vol%), the particles were sintered at 700°C for 10 hrs to obtain the carbon-coated LiMnPO₄.

### Comparative Example 2

Conditions of this comparative example were the same as those in Example 1 except that the amount of MnSO₄•H₂O was changed to 0.8 mol, 0.7 mol of FeSO₄•H₂O was changed to 1.2 mol of ZnSO₄, the amount of Li₂CO₃ was changed to 0.499 mol, and 0.001 mol of Mo(SO₄)₃ was changed to 0.001 mol of MgSO₄.

### Comparative Example 3

Conditions of this comparative example were the same as those in Example 1 except that the amount of MnSO₄•H₂O was changed to 1.4 mol, the amount of FeSO₄•H₂O was changed to 0.6 mol, the amount of Li₂CO₃ was changed to 0.534 mol, 0.001 mol of Mo(SO₄)₃ was changed to 0.001 mol of MgSO₄, the amount of phosphoric acid was changed to 0.88 mol, and the amount of H₄SiO₄ was changed to 0.12 mol, the amount of NH₄HF₂ was changed to 0.025 mol.

### Comparative Example 4

Conditions of this comparative example were the same as those in Example 1 except that the amount of MnSO₄•H₂O was changed to 1.2 mol, the amount of FeSO₄•H₂O was changed to 0.8 mol, the amount of Li₂CO₃ was changed to 0.474 mol, 0.001 mol of Mo(SO₄)₃ was replaced by 0.001 mol of MgSO₄, the amount of phosphoric acid was changed to 0.93 mol, the amount of H₄SiO₄ was changed to 0.07 mol, the amount of NH₄HF₂ was changed to 0.06 mol.

### 2. Properties of cathode active materials and test methods for battery performance

### 1. Measurement method of lattice change rate

In a constant temperature environment of 25°C, a cathode active material sample was placed in XRD (model Bruker D8 Discover), the sample was at tested at 1°/min, and test data were analyzed. Lattice constants a0, b0, c0, and v0 (a0, b0, and c0 represent lengths of the unit cell in all aspects, respectively, and v0 represents the volume of the unit cell, which can be directly obtained from the XRD refinement results) were calculated referring to a standard PDF card.

Using the preparation method for button battery in the above example, the cathode active material sample was prepared as a button battery, and the above button battery was charged at a small rate of 0.05 C until the current was reduced to 0.01 C. Then the cathode piece was taken out of the button battery, and soaked in DMC for 8 hrs. After that, the cathode piece was dried, scraped, and particles having a particle size of less than 500 nm were screened. Samples were taken from the particles and the lattice constant v1 was calculated according to the same way as the fresh sample in the above, and (v0-v1)/v0×100% was shown in the table as the lattice change rate before and after the complete deintercalation of lithium.

### 2. Measurement method of concentration of Li/Mn antisite defect

The XRD results obtained in the "Measurement method of lattice change rate" were compared with the standard crystal PDF (Powder Diffraction File) card, to obtain the concentration of Li/Mn antisite defect. Specifically, the XRD results obtained in the "Measurement method of lattice change rate" were imported into a General Structural Analysis System (GSAS) software, and to automatically obtain the refined results, which include the occupancy of different atoms. By reading the refined result, the concentration of Li/Mn antisite defect was obtained.

### 3. Measurement method of surface oxygen valence

5 g of a cathode active material sample was taken to prepare a button battery according to the preparation method of button battery as described in the above examples. The button battery was charged with a small rate of 0.05 C until the current decreases to 0.01 C. Then the cathode piece was taken out of the button battery, and soaked in DMC for 8 hrs. After that, the cathode piece was dried, scraped, and particles having a particle size of less than 500 nm were screened. The obtained particles were measured by electron energy loss spectroscopy (EELS, instrument model was Talos F200S) to obtain the energy loss near edge structure (ELNES), which reflected the density of states and energy level distribution of elements. According to the density of states and energy level distribution, the number of occupied electrons was calculated by integrating the data of the valence band density of states, so as to calculate the surface oxygen valence after being changed.

### 4. Measurement method of compacted density

5 g of the powder was taken and placed in a special compaction mold (CARVER mold in the United States, model 13mm), and then the mold was put on the compaction density instrument. A pressure of 3T was applied, the thickness (thickness after pressure relief) of the powder under such a pressure was read on the equipment, and then the compaction density was calculated by ρ = m/v.

### 5. Measurement method of dissolution of Mn (and Fe doped at Mn site) after cycling

The full battery was discharged to a cut-off voltage of 2.0 V at a rate of 0.1 C after being cycled at 45°C until the capacity decayed to 80%. Then the battery was disassembled, and the anode piece was taken out. 30 discs having a unit area (1540.25 mm²) were randomly taken from the anode piece, and the inductively coupled plasma emission spectrum (ICP) was tested with Agilent ICP-OES730. According to the ICP results, an amount of Fe (if the Mn site of the cathode active material is doped with Fe) and Mn was calculated, so as to calculate the dissolution amount of Mn (and Fe doped at the Mn site) after cycling. The test standard was based on EPA-6010D-2014.

### 6. Measurement method of initial gram capacity of coin cell

At 2.5 to 4.3 V, the button battery fabricated in the above was charged to 4.3 V at a rate of 0.1 C, then charged at a constant voltage of 4.3 V until the current was less than or equal to 0.05 mA, after standing for 5 mins, the button battery was discharged at the rate of 0.1 C to 2.0 V, in such condition, the discharge capacity was the initial gram capacity, denoted as D0.

### 7. Measurement method of constant current ratio of 3C charge

In a constant temperature environment of 25°C, a fresh full battery after standing for 5 mins was charged at a rate of 1/3 C to 4.3 V then charged at a constant voltage of 4.3 V until the current was less than or equal to 0.05 mA. After standing for another 5 mins, the charging capacity at this time was recorded as C0. Thereafter, the full battery was discharge to 2.5 V at a rate of 1/3 C, after standing for 5 mins, then charged to 4.3 V at a rate of 3 C. After standing for another 5 mins, the charging capacity at this time was recorded as C1. And the constant current ratio of 3C charging was C1/C0×100%.

The higher the constant current ratio of 3C charging is, the better the rate performance of the battery is.

### 8. Test of cycle performance of full battery at 45°C

In a constant temperature environment of 45°C, at 2.5 to 4.3 V, the full battery was charged to 4.3 V at a rate of 0.1 C, then charged at a constant voltage of 4.3 V until the current was less than or equal to 0.05 mA, after standing for 5 mins, the full battery was discharged at the rate of 0.1 C to 2.0 V, in such condition, the discharge capacity was the initial gram capacity, denoted as D0. The above charge and discharge cycle was repeated until the discharge capacity was reduced to 80% of D0. The number of cycles the battery has experienced was recorded in such condition.

### 9. Full battery 60°C flatulence test

The full battery fabricated in the above was stored at 100% state of charge (SOC) at 60°C. Before, after, and during the storage, the SOC was monitored by measuring an open circuit voltage (OCV) and an AC internal resistance (IMP) of the battery cell, and a volume of the battery cell was measured. The full battery was taken out after every 48 hrs of storage, and the open circuit voltage (OCV) and internal resistance (IMP) were tested after standing for 1 hr, and the battery cell volume was measured by a drainage method after cooling to room temperature. The drainage method was to first measure the gravity F₁ of the battery cell with a balance that automatically performs unit conversion on dial data, and then the battery cell was completely placed in deionized water (the density is known to be 1 g/cm³) to measure the gravity F₂ of the battery cell in such condition, a buoyancy F applied to the battery cell was F₁-F₂, and the battery cell volume V = (F₁-F₂) /(ρ × g) was calculated based on Archimedes' principle F_{float} = P × 9 × V_{discharge}.

According to the test results of OCV and IMP, the batteries of all the examples always maintained an SOC of more than 99% during the experiment until the end of storage.

After 30 days of storage, the battery cell volume was measured, and a percentage increase in the battery cell volume after storage relative to the battery cell volume before storage was calculated.

In addition, the residual capacity of the battery cell was measured. At 2.5 to 4.3 V, the full battery was charged to 4.3 V at a rate of 1 C, and then charged at a constant voltage of 4.3 V until the current is less than or equal to 0.05 mA. After standing the battery cell for 5 mins, and the charging capacity in such condition was recorded as the remaining capacity of the battery cell.

Table 1 shows compositions of cathode active materials of Examples 1-11 and Comparative Examples 1-4. Table 2 shows performance data of cathode active materials, button batteries, or full batteries of Examples 1-11 and Comparative Examples 1-4 measured according to the performance test method. Table 3 shows compositions of cathode active materials of Examples 12-27. Table 4 shows performance data of cathode active materials, button batteries, or full batteries of Examples 12-27 measured according to the performance test method.

**Table 1 Compositions of cathode active materials of Examples 1-11 and Comparative Examples 1-8**

| | Cathode active materials |
|---|---|
| Comparative Example 1 | LiMnPO₄ |
| Comparative Example 2 | Li_{0.998}Mg_{0.001}Mn_{0.4}Zn_{0.6}P_{0.999}Si_{0.001}O_{3.999}F_{0.001} |
| Comparative Example 3 | Li_{1.068}Mg_{0.001}Mn_{0.7}Fe_{0.3}P_{0.88}Si_{0.12}O_{3.95}F_{0.05} |
| Comparative Example 4 | Li_{0.948}Mg_{0.001}Mn_{0.6}Fe_{0.4}P_{0.93}Si_{0.07}O_{3.88}F_{0.12} |
| Example 1 | Li_{0.994}Mo_{0.001}Mn_{0.65}Fe_{0.35}P_{0.999}Si_{0.001}O_{3.999}F_{0.001} |
| Example 2 | Li_{0.977}Mg_{0.001}Mn_{0.65}Fe_{0.34}Ti_{0.01}P_{0.999}N_{0.001}O_{3.999}F_{0.001} |
| Example 3 | Li_{0.992}W_{0.001}Mn_{0.65}Fe_{0.35}P_{0.999}S_{0.001}O_{3.999}F_{0.001} |
| Example 4 | Li_{0.997}Al_{0.001}Mn_{0.65}Fe_{0.35}P_{0.999}Si_{0.001}O_{3.999}Cl_{0.001} |
| Example 5 | Li_{0.993}Nb_{0.001}Mn_{0.65}Fe_{0.345}V_{0.005}P_{0.999}S_{0.001}O_{3.999}F_{0.001} |
| Example 6 | Li_{0.993}Nb_{0.001}Mn_{0.65}Fe_{0.34}V_{0.005}Mg_{0.005}P_{0.999}S_{0.001}O_{3.999}F_{0.001} |
| Example 7 | Li_{0.993}Nb_{0.001}Mn_{0.65}Fe_{0.34}V_{0.005}Co_{0.005}P_{0.999}S_{0.001}O_{3.999}F_{0.001} |
| Example 8 | Li_{0.993}Nb_{0.001}Mn_{0.65}Fe_{0.34}V_{0.005}Ni_{0.005}P_{0.999}S_{0.001}O_{3.999}F_{0.001} |
| Example 9 | Li_{0.991}Nb_{0.001}Mn_{0.65}Fe_{0.349}Ti_{0.001}P_{0.999}S_{0.001}O_{3.999}Cl_{0.001} |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} |
| Example 11 | Li_{0.998}Mg_{0.001}Mn_{0.65}Fe_{0.345}V_{0.005}P_{0.999}Si_{0.001}O_{3.999}Br_{0.001} |

**Table 2 Performance data of cathode active materials, or button batteries, or full batteries of Examples 1-11 and Comparative Examples 1-8 measured according to the performance test method**

| | Latti ce chan ge rate (%) | Concentr ation of Li/Mn anti site defect(%) | Surfa ce oxyg en valen ce state | Compa cted density (g/cm³) | Dissolu tion of Mn and Fe after Cycling (ppm) | Initial gram capac ity (mAh /g) of butto n batter y | Const ant curren t ratio of 3C charg e (%) | Cycle number correspon ding to 80% capacity retention at 45°C | Expans ion rate (%) of battery cell stored at 60°C |
|---|---|---|---|---|---|---|---|---|---|
| Compara tive Example 1 | 11.4 | 5.2 | -1.55 | 1.7 | 1865 | 130.2 | 55.1 | 145 | 45.2 |
| Compara tive Example 2 | 3.7 | 1.5 | -1.80 | 2.01 | 517 | 77.3 | 70.2 | 563 | 16.9 |
| Compara tive Example 3 | 7.8 | 1.5 | -1.75 | 2.05 | 365 | 141.2 | 68.3 | 425 | 17.8 |
| Compara tive Example 4 | 8.4 | 1.4 | -1.79 | 2.16 | 198 | 144.3 | 66.9 | 447 | 19.8 |
| Example 1 | 6.3 | 1.2 | -1.82 | 2.21 | 173 | 157.6 | 71.4 | 584 | 7.3 |
| Example 2 | 6.8 | 1.1 | -1.85 | 2.25 | 141 | 154.5 | 78.4 | 613 | 6.5 |
| Example 3 | 6.4 | 0.9 | -1.86 | 2.31 | 122 | 156.7 | 79.1 | 675 | 7.5 |
| Example 4 | 5.5 | 0.9 | -1.89 | 2.38 | 103 | 153.7 | 82.4 | 664 | 7.2 |
| Example 5 | 5.3 | 0.7 | -1.98 | 2.45 | 84 | 155.1 | 86.9 | 781 | 6.6 |
| Example 6 | 2.4 | 0.7 | -1.95 | 2.47 | 64 | 158.9 | 94.9 | 779 | 5.2 |
| Example 7 | 2.2 | 0.6 | -1.96 | 2.49 | 66 | 158.8 | 96.8 | 891 | 5.0 |
| Example 8 | 3.4 | 0.5 | -1.98 | 2.51 | 56 | 158.7 | 96.5 | 753 | 5.2 |
| Example 9 | 3.8 | 0.5 | -1.96 | 2.45 | 67 | 147.6 | 94.3 | 713 | 5.6 |
| Example 10 | 4.0 | 0.6 | -1.97 | 2.46 | 82 | 156.1 | 95.1 | 673 | 5.5 |
| Example 11 | 3.6 | 0.7 | -1.95 | 2.46 | 94 | 157.2 | 95.9 | 620 | 5.4 |

**Table 3 Compositions of cathode active materials in Examples 12-27**

| | Cathode active materials | (1-y): y | a: x |
|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.13 | 997 |
| Example 13 | Li_{0.997}Mg_{0.001}Mn_{0.58}Fe_{0.4}V_{0.02}P_{0.999}N_{0.001}O_{3.999}F_{0.001} | 1.38 | 997 |
| Example 14 | Li_{0.997}Mg_{0.001}Mn_{0.65}Fe_{0.3}V_{0.05}P_{0.999}N_{0.001}O_{3.999}F_{0.001} | 1.86 | 997 |
| Example 15 | Li_{0.988}Mg_{0.005}Mn_{0.6}Fe_{0.35}V_{0.05}P_{0.999}S_{0.001}O_{3.999}F_{0.001} | 1.50 | 197.6 |
| Example 16 | Li_{0.984}Mg_{0.005}Mn_{0.6}Fe_{0.35}V_{0.05}P_{0.995}S_{0.005}O_{3.999}F_{0.001} | 1.50 | 196.8 |
| Example 17 | Li_{0.984}Mg_{0.005}Mn_{0.6}Fe_{0.35}V_{0.05}P_{0.999}S_{0.001}O_{3.995}F_{0.005} | 1.50 | 196.8 |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 |
| Example 19 | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 |
| Example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 |
| Example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 |
| Example 27 | Li_{0.97}Mg_{0.005}Mn_{0.7}Fe_{0.15}V_{0.05}C_{00.10}P_{0.92}Si_{0.08}O_{3.9}F_{0.1} | 2.33 | 194 |

**Table 4 Performance data of cathode active materials, button batteries, or full batteries of Examples 12-27 measured according to the performance test method**

| | lattic e chan ge rate (%) | Concentra tion of Li/Mn anti site defect(%) | Surfa ce oxyg en valen ce state | Compac ted density (g/cm³) | Dissolut ion of Mn and Fe after cycling (ppm) | Initial gram capaci ty (mAh /g) of button batter y | Const ant curren t ratio of 3C charge (%) | Cycle number correspon ding to 80% capacity retention at 45°C | Expans ion rate (%) of battery cell stored at 60°C |
|---|---|---|---|---|---|---|---|---|---|
| Exam ple 12 | 7.4 | 0.5 | -1.96 | 2.45 | 73 | 154.9 | 100.5 | 973 | 5.5 |
| Exam ple 13 | 7.6 | 0.4 | -1.98 | 2.48 | 61 | 158.5 | 87.8 | 982 | 6.9 |
| Exam ple 14 | 7.8 | 0.6 | -1.95 | 2.47 | 68 | 156.5 | 88.4 | 1091 | 6.1 |
| Exam ple 15 | 6.4 | 0.5 | -1.97 | 2.49 | 66 | 158.1 | 84.8 | 963 | 6.7 |
| Exam ple 16 | 5.4 | 0.7 | -1.94 | 2.44 | 67 | 156.9 | 89.6 | 961 | 7.4 |
| Exam ple 17 | 4.2 | 0.6 | -1.98 | 2.42 | 68 | 157.2 | 95.3 | 949 | 6.5 |
| Exam ple 18 | 2.5 | 0.4 | -1.96 | 2.46 | 62 | 158.5 | 97.1 | 1084 | 5.5 |
| Exam ple 19 | 2.4 | 0.4 | -1.97 | 2.47 | 63 | 158.2 | 97.1 | 1090 | 5.9 |
| Exam ple 20 | 2.6 | 0.4 | -1.95 | 2.45 | 65 | 156.2 | 96.2 | 1003 | 6.3 |
| Exam ple 21 | 3.3 | 0.5 | -1.93 | 2.46 | 62 | 156.6 | 94.7 | 1021 | 5.2 |
| Exam ple 22 | 3.1 | 0.5 | -1.95 | 2.46 | 56 | 158.0 | 93.6 | 991 | 5.4 |
| Exam ple 23 | 2.8 | 0.6 | -1.96 | 2.44 | 46 | 153.2 | 87.1 | 896 | 4.9 |
| Exam ple 24 | 2.5 | 0.5 | -1.97 | 2.45 | 44 | 153.8 | 92.7 | 1006 | 4.5 |
| Exam ple 25 | 2.2 | 0.4 | -1.98 | 2.46 | 39 | 154.4 | 95.4 | 1013 | 4.1 |
| Exam ple 26 | 3.4 | 0.6 | -1.95 | 2.25 | 27 | 148.4 | 95.5 | 1002 | 8.3 |
| Exam ple 27 | 2.7 | 0.5 | -1.98 | 2.28 | 22 | 146.5 | 93.9 | 969 | 9.4 |

### Examples 28-63

Cathode active materials, button batteries, and full batteries in these examples were prepared by the same methods as in Example 18, except that the composition of the electrolyte was changed, as shown in Table 5 below.

In addition, the performance data of the button batteries or full batteries of Examples 28-63 were measured according to the above performance test methods, as shown in Table 6.

**Table 5 Compositions of electrolyte**

| Exa mple s | First lithium salt | Content W1 (%) | First additive | Con tent W2 (%) | M, defi ned as W2/ W1 | Second lithium salt | Con tent W3 (%) | (W2+ W3)/W 1 |
|---|---|---|---|---|---|---|---|---|
| 28 | The same as in Example 18 | 12 | The same as in Example 18 | The sam e as in Exa mpl e 18 | 0.08 | The same as in Example 18 | The sam e as in Exa mpl e 18 | 0.33 |
| 29 | | 36 | | | 0.03 | | | 0.11 |
| 30 | | 5 | | | 0.20 | | | 0.80 |
| 31 | | 48 | | | 0.02 | | | 0.08 |
| 32 | | 1 | | | 1.00 | | | 4.00 |
| 33 | | 0.1 | | | 10.0 0 | | | 40.00 |
| 34 | | 20 | | | 0.05 | | | 0.20 |
| 35 | | 50 | | | 0.02 | | | 0.08 |
| 36 | The same as in Example 18 | The same as in Example 18 | Compound 2 | The same as in Example 18 | | | | |
| 37 | | | Compound 3 | | | | | |
| 38 | | | Compound 4 | | | | | |
| 39 | | | The same as in Example 18 | | | lithium difluoro dioxalate phosphat e | The same as in Example 18 | |
| 40 | | | | | | lithium bisoxalat e borate | | |
| 41 | | | | | | LiBF₄ | | |
| 42 | LiN(CF₃SO₂ )(C₃F₇SO₂) | The same as in Example 18 | | | | | | |
| 43 | LiN(CF₃SO₂ )2 | | | | | | | |
| 44 | LiN(C₂F₅SO ₂)(C₃F₇SO₂) | | | | | | | |
| 45 | Li(FSO₂)(CF ₃SO₂)N | | | | | | | |
| 46 | The same as in Example 18 | The same as in Example 18 | The same as in Example 18 | 0.3 | 0.02 | The same as in Example 18 | The sam e as in Exa mpl e 18 3 | 0.22 |
| 47 | | | | 5 | 0.33 | | | 0.53 |
| 48 | | | | 0.1 | 0.01 | | | 0.21 |
| 49 | | | | 10 | 0.67 | | | 0.86 |
| 50 | | | | 0.01 | 0.00 | | | 0.2 |
| 51 | | | | 20 | 1.33 | | | 1.5 |
| 52 | | | | The sam e as in Exampl e 18 | The sam e as in Exampl e 18 | | 0.3 | 0.09 |
| 53 | | | | | | | 5 | 0.40 |
| 54 | | | | | | | 0.1 | 0.07 |
| 55 | | | | | | | 10 | 0.73 |
| 56 | | | | 10 | | | 0.001 | 0.07 |
| 57 | | | | | | | 20 | 1.40 |
| 58 | | 10 | | | | | 10 | 2.00 |
| 59 | The same as in Example 18 | | | | | None | 0 | |
| 60 | The same as in Example 18 | 10 | The same as in Example 18 | 5 | 0.5 | The same as in Example 18 | | 0.8 |
| 61 | | 10 | | 0.1 | 0.01 | The same as in Example 18 | 0.1 | 0.02 |
| 62 | | 10 | | 5 | 0.5 | | 5 | 1 |
| 63 | The same as in Example 18 | | Compound 5 | The same as in Example 18 | | | | |

**Table 6 performance data of button batteries or full batteries of Examples 28-63 measured according to the above performance test methods**

| | Dissolution of Mn and Fe after cycling (ppm) | Initial gram capacity (mAh/g) of button battery | Constant current ratio of 3C charge (%) | Cycle number corresponding to 80% capacity retention at 45°C | Expansion rate (%) of battery cell stored at 60°C |
|---|---|---|---|---|---|
| Example 28 | 64 | 158.5 | 97 | 1085 | 5.4 |
| Example 29 | 62 | 157.9 | 96 | 1000 | 5.5 |
| Example 30 | 101 | 156.3 | 95 | 1045 | 6.3 |
| Example 31 | 53 | 157.2 | 87 | 954 | 5.2 |
| Example 32 | 134 | 155.5 | 78 | 923 | 7.5 |
| Example 33 | 187 | 154.2 | 73 | 856 | 9.6 |
| Example 34 | 165 | 156.8 | 97 | 1035 | 5.8 |
| Example 35 | 52 | 153.2 | 72.5 | 823 | 5.1 |
| Example 36 | 62 | 157.6 | 93 | 1001 | 5.8 |
| Example 37 | 63 | 156.4 | 92 | 995 | 6 |
| Example 38 | 64 | 157.9 | 94 | 1075 | 5.5 |
| Example 39 | 72 | 156.9 | 90 | 1001 | 5.9 |
| Example 40 | 75 | 155.4 | 92 | 985 | 6.2 |
| Example 41 | 68 | 157.6 | 95 | 1064 | 5.6 |
| Example 42 | 67 | 158.2 | 95 | 1023 | 5.8 |
| Example 43 | 62 | 158.4 | 94 | 1065 | 5.6 |
| Example 44 | 68 | 157.9 | 96 | 1021 | 5.9 |
| Example 45 | 66 | 158.3 | 97 | 1045 | 5.7 |
| Example 46 | 85 | 157.5 | 97 | 1065 | 7.5 |
| Example 47 | 56 | 155.5 | 95 | 1002 | 5.1 |
| Example 48 | 121 | 157.9 | 98 | 1001 | 8.9 |
| Example 49 | 45 | 150.3 | 92 | 923 | 4.3 |
| Example 50 | 186 | 158.4 | 98 | 897 | 15.3 |
| Example 51 | 32 | 146.3 | 84 | 645 | 3.5 |
| Example 52 | 59 | 157.5 | 98 | 1042 | 5.7 |
| Example 53 | 67 | 159.5 | 92 | 1085 | 5.5 |
| Example 54 | 54 | 158 | 89 | 1021 | 6.2 |
| Example 55 | 75 | 158.2 | 93 | 1008 | 6.4 |
| Example 56 | 50 | 157.9 | 82 | 1001 | 6.3 |
| Example 57 | 98 | 157.2 | 79 | 956 | 7.9 |
| Example 58 | 53 | 148.3 | 86 | 864 | 5.8 |
| Example 59 | 190 | 145.2 | 71 | 574 | 16.0 |
| Example 60 | 60 | 154.3 | 94 | 1033 | 5.3 |
| Example 61 | 98 | 156.4 | 95 | 942 | 10.0 |
| Example 62 | 58 | 156.5 | 93 | 1054 | 5.4 |
| Example 63 | 65 | 156 | 99 | 901 | 6.5 |

It can be seen from the above Tables 2, 4, and 6 that the cathode active materials of the examples of the present application have achieved better effects than those of the comparative examples in one or even all of the aspects of cycle performance, high temperature stability, gram capacity, and compacted density.

From the comparison between Examples 18-20 and 23-25, it can be seen that in the case of the same other elements, (1-y): y within the range of between 1 and 4 can further improve the energy density and the cycle performance of the secondary battery.

Moreover, in the above Examples 1 to 29, the electrolyte in the button batteries was replaced by an electrolyte composed of a solution of ethylene carbonate (EC), diethyl carbonate (DEC) and carbonic acid in a volume ratio of 1: 1: 1 containing 1 mol/L LiPF₆; and the electrolyte in the full batteries was replaced by the electrolyte composed of a solution of ethylene carbonate (EC), diethyl carbonate (DEC) and carbonic acid in a volume ratio of 1: 1: 1 containing 1 mol/L LiPF₆. For the button batteries or full batteries fabricated in Comparative Examples 5 to 31, dissolution of Mn and Fe after cycling (ppm), initial gram capacity (mAh/g) of the button battery, constant current ratio of 3C charge (%), cycle number corresponding to 80% capacity retention at 45°C, and expansion rate (%) of battery cell stored at 60°C(%) were tested according to the above methods, and test results were listed in Table 7.

**Table 7**

| | Dissolution of Mn and Fe after cycling (ppm) | Initial gram capacity (mAh/g) of button battery | Constant current ratio of 3C charge (%) | Cycle number corresponding to 80% capacity retention at 45°C | Expansion rate (%) of battery cell stored at 60°C |
|---|---|---|---|---|---|
| Comparative Example 5 | 192 | 156.2 | 68.1 | 552 | 8.4 |
| Comparative Example 6 | 161 | 153.4 | 75.1 | 583 | 7.5 |
| Comparative Example 7 | 144 | 154.6 | 76.7 | 646 | 8.6 |
| Comparative Example 8 | 125 | 153.6 | 78.4 | 638 | 8.3 |
| Comparative Example 9 | 102 | 153.8 | 84.5 | 769 | 7.8 |
| Comparative Example 10 | 88 | 157.5 | 92.5 | 747 | 6.4 |
| Comparative Example 11 | 85 | 158.5 | 94.8 | 858 | 6.3 |
| Comparative Example 12 | 79 | 157.6 | 93.8 | 726 | 6.2 |
| Comparative Example 13 | 86 | 146.8 | 90.3 | 686 | 6.8 |
| Comparative Example 14 | 103 | 155.7 | 91.2 | 638 | 6.5 |
| Comparative Example 15 | 112 | 155.8 | 92.6 | 587 | 6.4 |
| Comparative Example 16 | 92 | 153.3 | 97.2 | 948 | 6.7 |
| Comparative Example 17 | 83 | 157.1 | 85.1 | 953 | 7.8 |
| Comparative Example 18 | 87 | 155.4 | 85.2 | 1067 | 6.9 |
| Comparative Example 19 | 86 | 156.4 | 82.1 | 938 | 7.5 |
| Comparative Example 20 | 86 | 156.1 | 87.3 | 927 | 8.4 |
| Comparative Example 21 | 88 | 156.5 | 92.1 | 919 | 7.5 |
| Comparative Example 22 | 84 | 157.4 | 94.0 | 1057 | 6.4 |
| Comparative Example 23 | 84 | 156.8 | 94.4 | 1064 | 6.7 |
| Comparative Example 24 | 86 | 154.8 | 93.7 | 975 | 7.3 |
| Comparative Example 25 | 82 | 155.7 | 91.5 | 989 | 6.3 |
| Comparative Example 26 | 75 | 157.3 | 91.6 | 964 | 6.3 |
| Comparative Example 27 | 67 | 151.8 | 84.4 | 864 | 5.9 |
| Comparative Example 28 | 65 | 152.3 | 90.2 | 976 | 5.6 |
| Comparative Example 29 | 58 | 153.3 | 92.2 | 986 | 5.2 |
| Comparative Example 30 | 45 | 147.3 | 92.5 | 978 | 9.3 |
| Comparative Example 31 | 42 | 145.8 | 91.8 | 937 | 10.5 |

According to the comparison of Table 2, Table 4, and Table 7, it can be seen that the electrolyte compositions of the present application can further improve the energy density and cycle performance of the secondary battery.

It should be noted that the present application is not limited to the above embodiments. The embodiments are merely exemplary, and embodiments made within the scope of technical solutions of the present application and having the same technical idea and the same effects are included within the scope of the technical solutions of the present application. In addition, without departing from the scope of the present application, various modifications conceivable by those skilled in the art and other embodiments constructed by combining some components in the above embodiments are further included in the scope of the present application.

## Claims

1. A secondary battery, comprising a cathode piece and a non-aqueous electrolyte, wherein,
the cathode piece comprises a cathode active material, and the cathode active material has a chemical formula represented by LiₐAₓMn_{1-y}B_{y}P_{1-z}C_{z}O₄₋ₙDₙ,
wherein, the A comprises one or more elements selected from the group consisting of Zn, Al, Na, K, Mg, Nb, Mo, and W;
the B comprises one or more elements selected from the group consisting of Ti, V, Zr, Fe, Ni, Mg, Co, Ga, Sn, Sb, Nb, and Ge;
the C comprises one or more elements selected from the group consisting of B (boron), S, Si and N;
the D comprises one or more elements selected from the group consisting of S, F, Cl, and Br;
the a is selected from the range of 0.9 to 1. 1; the x is selected from the range of 0.001 to 0.1; the y is selected from the range of 0.001 to 0.5; the z is selected from the range of 0.001 to 0.1; the n is selected from 0.001 to a range of 0.1; and the cathode active material is electrically neutral;
the non-aqueous electrolyte comprises a first lithium salt and a first additive;
the first lithium salt comprises one or more selected from the group consisting of LiN(CₘF₂ₘ₊₁SO₂)(CₙF₂ₙ₊₁SO₂) and Li(FSO₂)₂N, m and n represent positive integers;
the first additive comprises one or more of a compound represented by Formula 1, 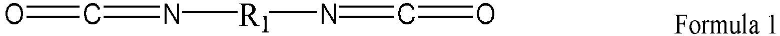
Ri represents any one of a C₂-C₁₀ alkylene, a C₂-C₁₀ heteroalkylene, a C₆-C₁₈ arylene, a C₂-C₁₈ heteroarylene, a C₃-C₁₈ alicyclylene, a C₃-C₁₈ heteroalicyclylene, which are substituted by one or more Rₐ or are unsubstituted; and
Rₐ comprises one or more selected from a halogen atom, -CN, -NCO, -OH, -COOH, -SOOH, a -COOR_{b}, a C₂-C₁₀ alkyl, a C₂-C₁₀ alkenyl, a C₂-C₁₀ alkynyl, a C₂-C₁₀ oxaalkyl, and R_{b} is any one selected from C₁-C₁₀ alkyls.

2. The secondary battery according to claim 1, wherein Ri represents any one of a C₂-C₁₀ alkylene, a C₂-C₁₀ oxaalkylene, a C₂-C₁₀ azaalkylene, phenylene, naphthylene, anthrylene, cyclobutylene, cyclopentylene, cyclohexylene, biphenylene, methylenediphenylene, which are substituted by one or more Rₐ or are unsubstituted; optionally, the Ri represents any one of a C₂-C₆ alkylene, phenylene, naphthylene, anthracene, cyclobutylene, cyclopentylene, cyclohexylene, biphenylene, and methylenediphenylene, which are substituted by one or more Rₐ or are unsubstituted;
and/or, the Rₐ comprises one or more selected from a halogen atoms, -CN, and a C₂-C₃ alkyl;
and/or, a number of the Rₐ in the compound represented by Formula 1 is 0, 1, 2, 3, or 4.

3. The secondary battery according to claim 1 or 2, wherein the first additive comprises one or more of the following compounds:

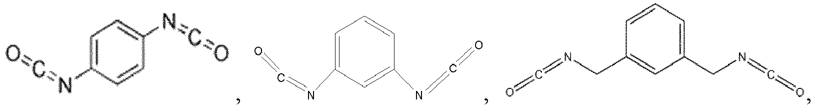

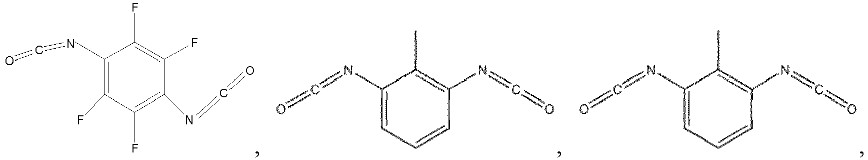

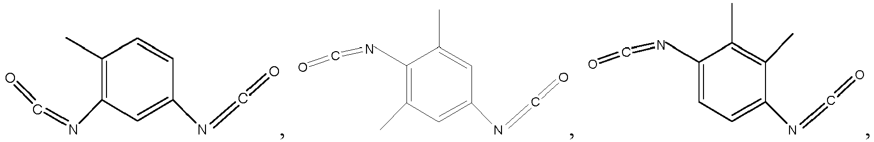

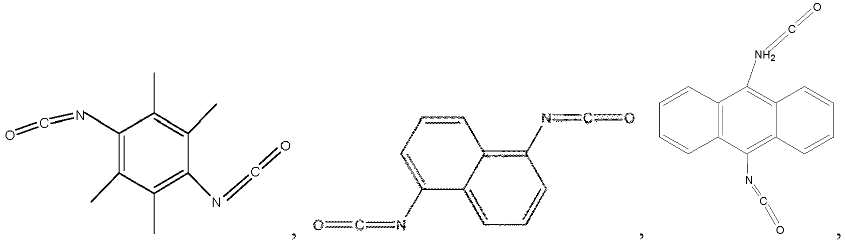

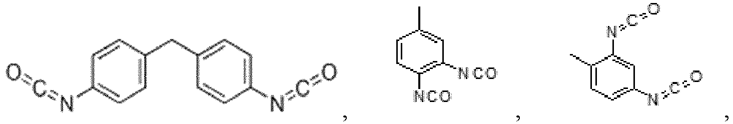

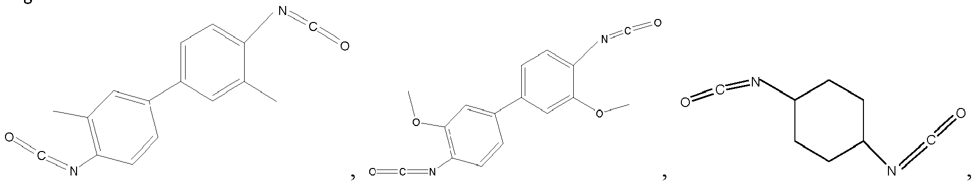

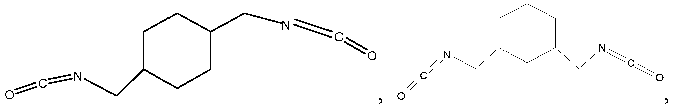

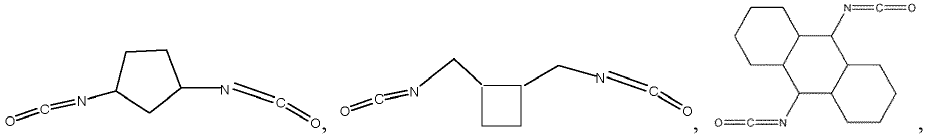

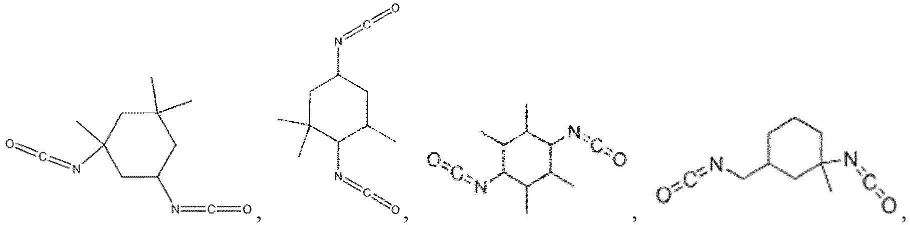

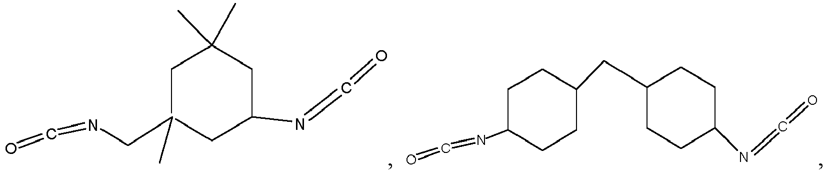

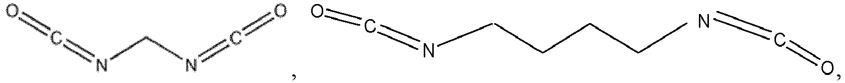

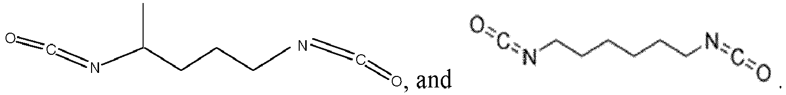

4. The secondary battery according to any one of claims 1-3, wherein, m and n each independently represent 1, 2 or 3;
and/or, the first lithium salt is any one selected from LiN(CF₃SO₂)₂ and Li(FSO₂)₂N, and the first additive is any one selected from the following compounds:

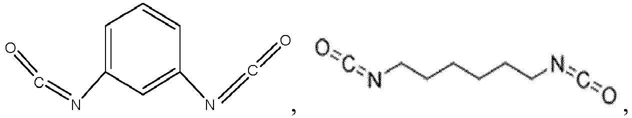

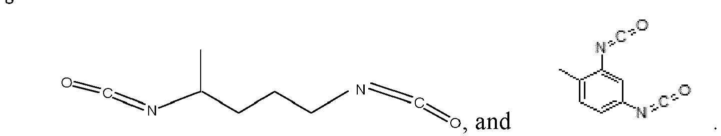

5. The secondary battery according to any one of claims 1-3, wherein, based on a total weight of the non-aqueous electrolyte,
a content of the first lithium salt is W1 wt. %, W1 is between 0.1 and 48, optionally between 5 and 20;
a content of the first additive is W2 wt. %, W2 is between 0.01 and 20, optionally between 0.1 and 10 or between 0.3 and 5;
optionally, W2/W1 is defined as M, and M is between 0.001 and 3, optionally between 0.005 and 0.5.

6. The secondary battery according to any one of claims 1-5, wherein, the non-aqueous electrolyte further comprises a second lithium salt; and the second lithium salt comprises one or more selected from lithium difluorophosphate, lithium difluorodioxalate phosphate, lithium difluorooxalate borate, lithium bisoxalate borate, LiPF₆, and LiBF₄.

7. The secondary battery according to claim 6, wherein, based on the total weight of the non-aqueous electrolyte, a content of the second lithium salt is W3 wt. %, W3 is between 0.01 and 20, optionally between 0.1 and 10 or between 0.3 and 5.

8. The secondary battery according to claim 7, wherein, (W2+W3)/W1 is defined as N, and N is between 0.01 and 5, optionally between 0.02 and 1.

9. The secondary battery according to any one of claims 1-8, wherein, the non-aqueous electrolyte further comprises a second additive; and the second additive comprises one or more selected from the group consisting of a cyclic carbonate compound containing an unsaturated bond, a halogen-substituted saturated cyclic carbonate compound, a sulfate compound, a sulfite compound, a sultone compound, a disulfonic acid compound, a nitrile compound, an aromatic compound, a phosphazene compound, a cyclic anhydride compound, a phosphorous acid ester compound, a phosphate ester compound, a borate ester compound.

10. The secondary battery according to any one of claims 1-9, wherein, the non-aqueous electrolyte further comprises an organic solvent;
the organic solvent comprises one or more of a cyclic carbonate compound, a chain carbonate compound, a carboxylate compound;
optionally, the organic solvent comprises one or more selected from the group consisting of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl formate, methyl acetate, ethyl acetate, propyl acetate, methyl propionate, ethyl propionate, butyl propionate, tetrahydrofuran.

11. The secondary battery according to any one of claims 1-10, wherein, the A, the C, and the D are each independently any one element within the above respective ranges, and the B is at least two elements of within a range thereof;
optionally,
the A is any element selected from Mg and Nb; and/or,
the B is at least two elements selected from Fe, Ti, V, Co, and Mg, and is optionally Fe and one or more elements selected from Ti, V, Co, and Mg; and/or,
the C is S; and/or,
the D is F.

12. The secondary battery according to any one of claims 1-11, wherein,
the x is selected from a range of between 0.001 and 0.005; and/or,
the y is selected from a range of between 0.01 and 0.5, optionally selected from a range of between 0.25 and 0.5; and/or,
the z is selected from a range of between 0.001 and 0.005; and/or,
the n is selected from the a of between 0.001 and 0.005.

13. The secondary battery according to any one of claims 1-12, wherein, (1-y): y is within a range of between 1 and 4, optionally within a range of between 1.5 and 3, and a: x is within a range of between 9 and 1100, optionally within a range of between 190 and 998.

14. The secondary battery according to any one of claims 1-13, wherein, the cathode active material has a lattice change rate of less than 8%, optionally less than 4%.

15. The secondary battery according to any one of claims 1-14, wherein, the cathode active material has a concentration of Li/Mn antisite defect of less than 2%, optionally less than 0.5%.

16. The secondary battery according to any one of claims 1-15, wherein, the cathode active material has a surface oxygen valence state of less than -1.82, optionally between -1.89 and -1.98.

17. The secondary battery according to any one of claims 1-16, wherein, the cathode active material has a compacted density at 3T of higher than 2.0 g/cm, optionally higher than 2.2 g/cm.

18. The secondary battery according to any one of claims 1-17, wherein, a surface of the cathode active material is coated with carbon.

19. A battery module comprising a secondary battery, wherein, the secondary battery is the secondary battery according to any one of claims 1-18.

20. A battery pack, comprising a battery module, wherein, the battery module is the battery module according to claim 19.

21. An electric device, comprising at least one of a secondary battery, a battery module, and a battery pack, wherein, the secondary battery is the secondary battery according to any one of claims 1-18; the battery module is the battery module according to claim 19, and the battery pack is the battery pack according to claim 20.
